# EUROPEAN PATENT APPLICATION

(11) **EP 3 177 102 A1**
(43) Date of publication of application: **07.06.2017**
(21) Application number: 15826837.5
(22) Date of filing: 06.01.2015
(51) Int. Cl.: H04W 88/02, H04W 4/00

(54) **MOBILE TERMINAL**

(30) Priority: 29.07.2014 KR 20140096279
(71) Applicant: LG Electronics Inc., Yeongdeungpo-gu Seoul 150-721 (KR)
(72) Inventor: HAN, Jechan, Seoul 137-893 (KR)
(74) Representative: Beyer, Andreas
(86) International application number: PCT/KR2015/000088
(87) International publication number: WO 2016/017878

(57) **Abstract**

A mobile terminal according to an embodiment of the present invention includes a touch screen for displaying a plurality of web pages accessed through an Internet application (app), and a controller for, if a bookmark addition command on a first web page among the plurality of web pages is input, controlling the touch screen to display a list of one or more related pages related to the first web page among the plurality of previously accessed web pages.

## Description

### TECHNICAL FIELD

The present invention relates to a mobile terminal which enables a user to use the terminal by further considering user's convenience.

### BACKGROUND ART

Depending on whether terminals are movable, the terminals are divided into mobile/portable terminals and stationary terminals. Again, the mobile terminals may be divided into handheld terminals and vehicle mounted terminals depending on whether users can carry the mobile terminals personally.

Functions of the mobile terminals become diversified. For example, the functions include data and voice communication, image capturing and video recording through a camera, voice recording, music file playback through a speaker system, and an image or video output to a display unit. Some terminals may have an additional electronic game play function or a multimedia player function. Especially, recent mobile terminals may receive multicast signals for providing visual contents such as broadcasts and video or television programs.

As functions of a terminal are diversified, such a terminal may be implemented in a form of a multimedia player with multi-functions, for example, image or video capturing, playback of music or video files, game plays, and broadcast reception.

In order to support and enhance the increasing number of functions in a terminal, it may be considered to improve a structural part and/or a software part of the terminal.

Meanwhile, a user may perform web surfing through a terminal. When the user desires to designate a desired page as a bookmark page after the web surfing, only a current web page to be currently set can be designated as a bookmark, but a web page related to the web page to be currently set, such as a web page that was connected before a few minutes or a web page that was connected before a few times, cannot be integrally designated or stored together with the current web page as a bookmark, which is inconvenient. In this case, the user should set each web page that was connected before a few minutes or a few times as a bookmark by separately checking a web page history, which is cumbersome.

### DISCLOSURE OF THE INVENTION

### TECHNICAL PROBLEM

The present invention is conceived to solve the aforementioned problems. Accordingly, an object of the present invention is to provide a mobile terminal which can easily record, as a bookmark, all information that a user searches through previously accessed web pages, without any loss.

Another object of the present invention is to provide a mobile terminal and a method for controlling the same, which can integrated and add, in one bookmark form, several web pages that a user ultimately intends to integrate, by automatically detecting web page having high relation degrees among web pages accessed in the past.

### TECHNICAL SOLUTION

According to an aspect of the present invention, there is provided a mobile terminal including: a touch screen configured to display a plurality of web pages accessed through an Internet application (app); and a controller configured to, if a bookmark addition command on a first web page among the plurality of web pages is input, control the touch screen to display a list of one or more related pages related to the first web page among the plurality of previously accessed web pages.

### ADVANTAGEOUS EFFECTS

The mobile terminal and the method for controlling the same according to the present invention have advantageous effects as follows.

According to at least one of embodiments of the present disclosure, even when information that a user desires to search are scattered in several web pages, the information that a user desires to search can be easily added as one bookmark without exception.

In addition, according to at least one of embodiments of the present disclosure, convenience can be provided to the user by enabling a process of setting several web pages as a bookmark to be performed through only a simple operation.

In addition, according to at least one of embodiments of the present disclosure, it is possible to record not only web pages but also correlation between recorded bookmarks through an integrated bookmark method.

Other objects and additional scope of applicability will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

Fig. 1 is a block diagram illustrating a mobile terminal according to the present invention.
Fig. 2 is a view illustrating the mobile terminal in which a web page is displayed according to an embodiment of the present invention.
Fig. 3 is a flowchart illustrating a control method of the mobile terminal according to an embodiment of the present invention.
Fig. 4 is a screen on which a thumbnail image of a web page is displayed according to an embodiment of the present invention.
Figs. 5 and 6 are screens illustrating a bookmark addition process according to an embodiment of the present invention.
Fig. 7 is a screen on which a bookmark addition menu is displayed according to an embodiment of the present invention.
Fig. 8 is a screen on which a bookmark addition menu is displayed according to another embodiment of the present invention.
Figs. 9 and 10 are screens on which a bookmark addition window is displayed according to embodiments of the present invention.
Fig. 11 is a screen on which a web page is displayed according to an embodiment of the present invention.
Fig. 12 is a view illustrating an operation of the mobile terminal in web page access according to an embodiment of the present invention.
Fig. 13 is a view illustrating an operation of the mobile terminal, in which a related page is determined after web page access according to an embodiment of the present invention.
Fig. 14 is a view illustrating history information according to an embodiment of the present invention.
Fig. 15 is a view illustrating access time information according to an embodiment of the present invention.
Figs. 16 and 17 are views illustrating a method for determining a related page using access time information.
Fig. 18 is a view illustrating an operation of searching a list of a plurality of pages and selecting one page through a search word input and search operation.
Fig. 19 is a view illustrating an operation of determining pages having the same search word as related pages.
Fig. 20 is a view illustrating a parent page and a reference page according to an embodiment of the present invention, and Fig. 21 is a view illustrating a reference page and a children page according to an embodiment of the present invention.
Fig. 22 is a view illustrating a reference page, a parent page, and a sibling page according to an embodiment of the present invention.
Fig. 23 is a view illustrating an operation of determining a related page on the basis of link access information according to an embodiment of the present invention.
Fig. 24 is a screen on which a bookmark addition menu is displayed according to an embodiment of the present invention.
Figs. 25 and 26 are screens on which related page information are differently displayed according to relation degrees between related pages and a setting page.
Fig. 27 is a flowchart illustrating a method for aligning and displaying related pages according to relation degrees between the related pages and a setting page according to an embodiment of the present invention.
Fig. 28 is a flowchart illustrating a method for determining a relation degree according to an embodiment of the present invention.
Fig. 29 is a view illustrating HTML header information according to an embodiment of the present invention.
Fig. 30 is a view illustrating an operation of comparing user search keywords from respective related pages.
Fig. 31 is a screen on which each related page is displayed by determining a relation degree according to a result obtained by comparing user search keywords.
Fig. 32 is a screen on which a bookmark recommendation window is displayed according to an embodiment of the present invention, and Fig. 33 is a screen on which a selection is acquired from related pages in the bookmark recommendation window.
Fig. 34 is a flowchart illustrating a method for displaying a page designated as a bookmark according to an embodiment of the present invention.
Fig. 35 is a screen on which a bookmark window is displayed according to an embodiment of the present invention.
Fig. 36 a screen on which the bookmark window is displayed according to another embodiment of the present invention.
Figs. 37 to 39 are screens on which a designated page list is displayed to be distinguished in the bookmark window according to an embodiment of the present invention.
Figs. 40 and 41 are screens illustrating a method for cancelling designation of each designated page in the bookmark addition window according to an embodiment of the present invention.
Fig. 42 is a screen on which a bookmark window is displayed according to an embodiment of the present invention.
Figs. 43 and 44 are screens illustrating an operation of cancelling designation of each designated page in the bookmark window according to an embodiment of the present invention.
Fig. 45 is a screen on which the bookmark window is displayed according to still another embodiment of the present invention.
Fig. 46 is a screen illustrating an operation when a bookmark chain is selected.
Figs. 47 and 48 are screens illustrating an operation of displaying page icons.
Figs. 49 and 50 are screens illustrating an operation of displaying page thumbnail images.
Figs. 51 and 52 are screens illustrating an operation of displaying page URLs.
Figs. 53 to 55 are screens illustrating an operation of displaying switch tabs.
Fig. 56 is a screen illustrating an operation of cancelling designation of a designated page after entry into the bookmark chain.

### MODE FOR CARRYING OUT THE INVENTION

Hereinafter, embodiments of the present invention are described in more detail with reference to accompanying drawings and regardless of the drawings symbols, same or similar components are assigned with the same reference numerals and thus overlapping descriptions for those are omitted. The suffixes "module" and "unit" for components used in the description below are assigned or mixed in consideration of easiness in writing the specification and do not have distinctive meanings or roles by themselves. In the following description, detailed descriptions of well-known functions or constructions will be omitted since they would obscure the invention in unnecessary detail. Additionally, the accompanying drawings are used to help easily understanding embodiments disclosed herein but the technical idea of the present invention is not limited thereto. It should be understood that all of variations, equivalents or substitutes contained in the concept and technical scope of the present invention are also included.

It will be understood that the terms "first" and "second" are used herein to describe various components but these components should not be limited by these terms. These terms are used only to distinguish one component from other components.

In this disclosure below, when one part (or element, device, etc.) is referred to as being 'connected' to another part (or element, device, etc.), it should be understood that the former can be 'directly connected' to the latter, or 'electrically connected' to the latter via an intervening part (or element, device, etc.). It will be further understood that when one component is referred to as being 'directly connected' or 'directly linked' to another component, it means that no intervening component is present.

The terms of a singular form may include plural forms unless they have a clearly different meaning in the context.

Additionally, in this specification, the meaning of "include," "comprise," "including," or "comprising," specifies a property, a region, a fixed number, a step, a process, an element and/or a component but does not exclude other properties, regions, fixed numbers, steps, processes, elements and/or components.

Mobile terminals described in this specification may include mobile phones, smartphones, laptop computers, terminals for digital broadcast, personal digital assistants (PDAs), portable multimedia players (PMPs), navigation systems, slate PCs, tablet PCs, ultrabooks, and wearable devices (for example, smart watches, smart glasses, and head mounted displays (HMDs)).

However, it is apparent to those skilled in the art that configurations according to embodiments of the present invention disclosed in this specification are applicable to stationary terminals such as digital TVs, desktop computers, and digital signage, except for the case applicable to only mobile terminals.

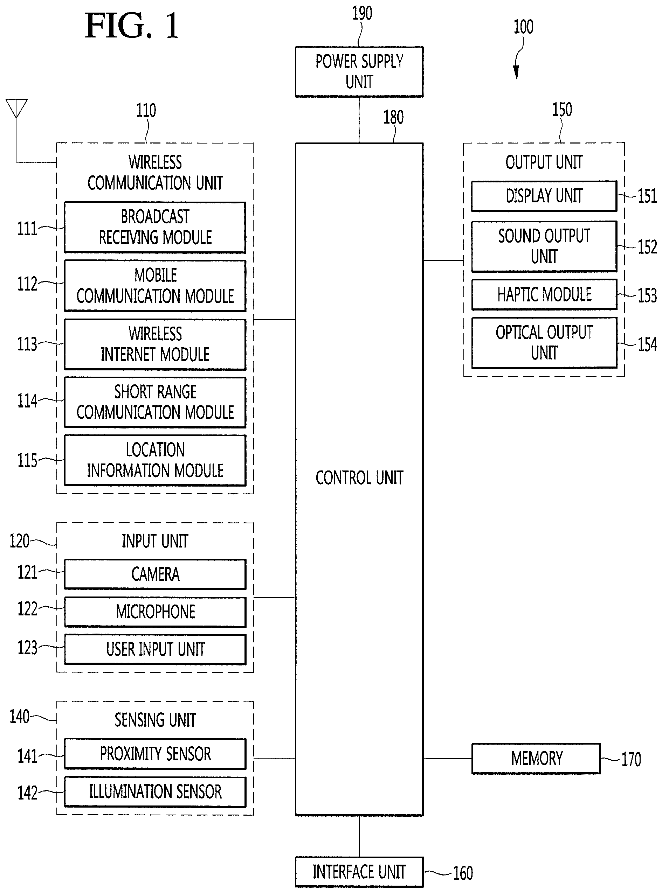

Fig. 1 is a block diagram illustrating a mobile terminal according to an embodiment of the present invention.

The mobile terminal 100 may include a wireless communication unit 110, an input unit 120, a sensing unit 140, an output unit 150, an interface unit 160, a memory 170, a control unit 180, and a power supply unit 190. In implementing a mobile terminal, components shown in Fig. 1 are not necessary, so that a mobile terminal described in this specification may include components less or more than the components listed above.

In more detail, the wireless communication unit 110 in the components may include at least one module allowing wireless communication between the mobile terminal 100 and a wireless communication system, between the mobile terminal 100 and another mobile terminal 100, or between the mobile terminal 100 and an external server. Additionally, the wireless communication unit 110 may include at least one module connecting the mobile terminal 100 to at least one network.

The wireless communication unit 110 may include at least one of a broadcast receiving module 111, a mobile communication module 112, a wireless internet module 113, a short-range communication module 114, and a location information module 115.

The input unit 120 may include a camera 121 or an image input unit for image signal input, a microphone 122 or an audio input unit for receiving audio signal input, and a user input unit 123 (for example, a touch key and a mechanical key)) for receiving information from a user. Voice data or image data collected by the input unit 120 are analyzed and processed as a user's control command.

The sensing unit 140 may include at least one sensor for sensing at least one of information in a mobile terminal, environmental information around a mobile terminal, and user information. For example, the sensing unit 140 may include at least one of a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, an ultrasonic sensor, an optical sensor (for example, the camera 121), a microphone (for example, the microphone 122), a battery gauge, an environmental sensor (for example, a barometer, a hygrometer, a thermometer, a radiation sensor, a thermal sensor, and a gas sensor), and a chemical sensor (for example, an electronic noise, a healthcare sensor, and a biometric sensor). Moreover, a mobile terminal disclosed in this specification may combines information sensed by at least two or more sensors among such sensors and may then utilize it.

The output unit 150 is used to generate a visual, auditory, or haptic output and may include at least one of a display unit 151, a sound output unit 152, a haptic module 153, and an optical output unit 154. The display unit 151 may be formed with a mutual layer structure with a touch sensor or formed integrally, so that a touch screen may be implemented. Such a touch screen may serve as the user input unit 123 providing an input interface between the mobile terminal 100 and a user and an output interface between the mobile terminal 100 and a user at the same time.

The interface unit 160 may serve as a path to various kinds of external devices connected to the mobile terminal 100. The interface unit 160 may include at least one of a wired/wireless headset port, an external charger port, a wired/wireless data port, a memory card port, a port connecting a device equipped with an identification module, an audio Input/Output (I/O) port, a video I/O port, and an earphone port. In correspondence to that an external device is connected to the interface unit 160, the mobile terminal 100 may perform an appropriate control relating to the connected external device.

Additionally, the memory 170 may store data supporting various functions of the mobile terminal 100. The memory 170 may store a plurality of application programs (for example, application programs or applications) running on the mobile terminal 100 and also data and commands for operations of the mobile terminal 100. At least part of such an application program may be downloaded from an external server through a wireless communication. Additionally, at least part of such an application program may be included in the mobile terminal 100 from the time of shipment in order to perform a basic function (for example, an incoming call, a transmission function, and a message reception) of the mobile terminal 100. Moreover, an application program may be stored in the memory 170 and installed on the mobile terminal 100, so that it may run to perform an operation (or a function) of the mobile terminal 100 by the control unit 180.

The control unit 180 may control overall operations of the mobile terminal 100 generally besides an operation relating to the application program. The control unit 180 may provide or process appropriate information or functions to a user by processing signals, data, and information inputted/outputted through the above components or executing application programs stored in the memory 170.

Additionally, in order to execute an application program stored in the memory 170, the control unit 180 may control at least part of the components shown in Fig. 1. Furthermore, in order to execute the application program, the control unit 180 may combine at least two of the components in the mobile terminal 100 and may then operate it.

The power supply unit 190 may receive external power or internal power under a control of the control unit 180 and may then supply power to each component in the mobile terminal 100. The power supply unit 190 includes a battery and the battery may be a built-in battery or a replaceable battery.

At least part of the each component may operate cooperatively in order to implement operations, controls, or control methods of a mobile terminal 100 according to various embodiments of the present invention described below. Additionally, the operations, controls, or control methods of a mobile terminal 100 may be implemented on the mobile terminal 100 by executing at least one application program stored in the memory 170.

Hereinafter, prior to examining various embodiments implemented through the mobile terminal 100, the above-listed components are described in more detail with reference to Fig. 1.

First, in describing the wireless communication unit 110, the broadcast receiving module 111 of the wireless communication unit 110 may receive a broadcast signal and/or broadcast related information from an external broadcast management server through a broadcast channel. The broadcast channel may include a satellite channel and a terrestrial channel. At least two broadcast receiving modules for simultaneous broadcast reception for at least two broadcast channels or broadcast channel switching may be provided to the mobile terminal 100.

The mobile communication module 112 may transmit/receive a wireless signal to/from at least one of a base station, an external terminal, and a server on a mobile communication network established according to the technical standards or communication methods for mobile communication (for example, Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), and Long Term Evolution-Advanced (LTE-A)).

The wireless signal may include various types of data according to a voice call signal, a video call signal, or text/multimedia message transmission.

The wireless Internet module 113 refers to a module for wireless Internet access and may be built in or external to the mobile terminal 100. The wireless Internet module 113 may be configured to transmit/receive a wireless signal in a communication network according to wireless Internet technologies.

The wireless Internet technology may include Wireless LAN (WLAN), Wireless-Fidelity (Wi-Fi), Wi-Fi Direct, Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), Long Term Evolution (LTE), and Long Term Evolution-Advanced (LTE-A) and the wireless Internet module 113 transmits/receives data according at least one wireless Internet technology including Internet technology not listed above.

From the viewpoint that wireless Internet access by WiBro, HSDPA, HSUPA, GSM, CDMA, WCDMA, LTE, and LTE-A is achieved through a mobile communication network, the wireless Internet module 113 performing wireless Internet access through the mobile communication network may be understood as one type of the mobile communication module 112.

The short-range communication module 114 may support short-range communication by using at least one of Bluetooth™, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The short-range communication module 114 may support wireless communication between the mobile terminal 100 and a wireless communication system, between the mobile terminal 100 and another mobile terminal 100, or between networks including the mobile terminal 100 and another mobile terminal 100 (or an external server) through wireless area networks. The wireless area networks may be wireless personal area networks.

Here, the other mobile terminal 100 may be a wearable device (for example, a smart watch, a smart glass, and an HMD) that is capable of exchanging data (or interworking) with the mobile terminal 100. The short-range communication module 114 may detect (or recognize) a wearable device around the mobile terminal 100, which is capable of communicating with the mobile terminal 100 Furthermore, if the detected wearable device is a device authenticated to communicate with the mobile terminal 100, the control unit 180 may transmit at least part of data processed in the mobile terminal 100 to the wearable device through the short-range communication module 114. Accordingly, a user of the wearable device may use the data processed in the mobile terminal 100 through the wearable device. For example, according thereto, when a call is received by the mobile terminal 100, a user may perform a phone call through the wearable device or when a message is received by the mobile terminal 100, a user may check the received message.

The location information module 115 is a module for obtaining the location (or the current location) of a mobile terminal and its representative examples include a global positioning system (GPS) module or a Wi-Fi module. For example, the mobile terminal may obtain its position by using a signal transmitted from a GPS satellite through the GPS module. As another example, the mobile terminal may obtain its position on the basis of information of a wireless access point (AP) transmitting/receiving a wireless signal to/from the Wi-Fi module, through the Wi-Fi module. If necessary, the position information module 115 may perform a function of another module in the wireless communication unit 110 in order to obtain data on the location of the mobile terminal substitutionally or additionally. The location information module 115 is a module for obtaining the position (or the current position) of the mobile terminal and is not limited to a module directly calculating and obtaining the position of the mobile terminal.

Then, the input unit 120 is used for inputting image information (or signal), audio information (or signal), data, or information inputted from a user and the mobile terminal 100 may include at least one camera 121 in order for inputting image information. The camera 121 processes image frames such as a still image or a video obtained by an image sensor in a video call mode or a capturing mode. The processed image frame may be displayed on the display unit 151 or stored in the memory 170. Moreover, a plurality of cameras 121 equipped in the mobile terminal 100 may be arranged in a matrix structure and through the camera 121 having such a matrix structure, a plurality of image information having various angles or focuses may be inputted to the input terminal 100. Additionally, the plurality of cameras 121 may be arranged in a stereo structure to obtain the left and right images for implementing a three-dimensional image.

The microphone 122 processes external sound signals as electrical voice data. The processed voice data may be utilized variously according to a function (or an application program being executed) being performed in the mobile terminal 100. Moreover, various noise canceling algorithms for removing noise occurring during the reception of external sound signals may be implemented in the microphone 122.

The user input unit 123 is to receive information from a user and when information is inputted through the user input unit 123, the control unit may control an operation of the mobile terminal 100 to correspond to the inputted information. The user input unit 123 may include a mechanical input means (or a mechanical key, for example, a button, a dome switch, a jog wheel, and a jog switch at the front, back or side of the mobile terminal 100) and a touch type input means. As one example, a touch type input means may include a virtual key, a soft key, or a visual key, which is displayed on a touch screen through software processing or may include a touch key disposed at a portion other than the touch screen. Moreover, the virtual key or visual key may have various forms and may be disposed on a touch screen and for example, may include graphic, text, icon, video, or a combination thereof.

Moreover, the sensing unit 140 may sense at least one of information in a mobile terminal, environmental information around a mobile terminal, and user information and may then generate a sensing signal corresponding thereto. On the basis of such a sensing signal, the control unit 180 may control the drive or control of the mobile terminal 100 or may perform data processing, functions, or operations relating to an application program installed in the mobile terminal 100. Representative sensors among various sensors included in the sensing unit 140 will be described in more detail.

First, the proximity sensor 141 refers to a sensor detecting whether there is an object approaching a predetermined detection surface or whether there is an object around by using the strength of an electromagnetic field or infrared, without mechanical contact. The proximity sensor 141 may disposed in an inner area of a mobile terminal surrounded by the touch screen or around the touch screen.

Examples of the proximity sensor 141 may include a transmission-type photoelectric sensor, a direct reflective-type photoelectric sensor, a mirror reflective-type photoelectric sensor, a high-frequency oscillation-type proximity sensor, a capacitive-type proximity sensors, a magnetic-type proximity sensor, and an infrared proximity sensor. If the touch screen is a capacitive type, the proximity sensor 141 may be configured to detect the proximity of an object by changes in an electric field according to the proximity of the object having conductivity. In this case, the touch screen (or a touch sensor) itself may be classified as a proximity sensor.

Moreover, for convenience of description, an action for recognizing the position of an object on the touch screen as the object is close to the touch screen without contacting the touch screen is called "proximity touch" and an action that the object actually contacts the touch screen is called "contact touch". A position that an object is proximity-touched on the touch screen is a position that the object vertically corresponds to the touch screen when the object is proximity-touched. The proximity sensor 141 may detect a proximity touch and a proximity touch pattern (for example, a proximity touch distance, a proximity touch direction, a proximity touch speed, a proximity touch time, a proximity touch position, and a proximity touch movement state). Moreover, the control unit 180 processes data (for information) corresponding to a proximity touch operation and a proximity touch pattern, detected through the proximity sensor 141, and furthermore, may output visual information corresponding to the processed data on the touch screen. Furthermore, according to whether a touch for the same point on the touch screen is a proximity touch or a contact touch, the control unit 180 may control the mobile terminal 100 to process different operations or data (or information).

The touch sensor detects a touch (or a touch input) applied to the touch screen (or the display unit 151) by using at least one of various touch methods, for example, a resistive film method, a capacitive method, an infrared method, an ultrasonic method, and a magnetic field method.

For example, the touch sensor may be configured to convert a pressure applied to a specific portion of the touch screen or changes in capacitance occurring at a specific portion into electrical input signals. The touch sensor may be configured to detect a position and area that a touch target applying a touch on the touch screen touches the touch sensor, a pressured when touched, and a capacitance when touched. Here, the touch target, as an object applying a touch on the touch sensor, may be a finger, a touch pen, a stylus pen, or a pointer, for example.

In such a manner, when there is a touch input on the touch sensor, signal(s) corresponding thereto are sent to a touch controller. The touch controller processes the signal(s) and then transmits corresponding data to the control unit 180. Therefore, the control unit 180 may recognize which area of the display unit 151 is touched. Herein, the touch controller may be an additional component separated from the control unit 180 or may be the control unit 180 itself.

Moreover, the control unit 180 may perform different controls or the same control according to types of a touch target touching the touch screen (or a touch key equipped separated from the touch screen). Whether to perform different controls or the same control according to types of a touch target may be determined according to a current operation state of the mobile terminal 100 or an application program in execution.

Moreover, the above-mentioned touch sensor and proximity sensor are provided separately or combined and may thus sense various types of touches, for example, short (or tap) touch), long touch, multi touch, drag touch, flick touch, pinch-in touch, pinch-out touch, swipe touch, and hovering touch for the touch screen.

The ultrasonic sensor may recognize position information of a detection target by using ultrasonic waves. Moreover, the control unit 180 may calculate the position of a wave source through information detected by an optical sensor and a plurality of ultrasonic sensors. The position of the wave source may be calculated by using the property that light is much faster than ultrasonic wave, that is, a time that light reaches an optical signal is much shorter than a time that ultrasonic wave reaches an ultrasonic sensor. In more detail, the position of the wave source may be calculated by using a time difference with a time that ultrasonic wave reaches by using light as a reference signal.

Moreover, the camera 121 described as a configuration of the input unit 120 may include at least one of a camera sensor (for example, CCD and CMOS), a photo sensor (or an image sensor), and a laser sensor.

The camera 121 and the laser sensor may be combined to detect a touch of a detection target for a three-dimensional image. The photo sensor may be stacked on a display device and is configured to scan a movement of a detection target close to the touch screen. In more detail, the photo sensor mounts a photo diode and a transistor (TR) in a row/column and scans content disposed on the photo sensor by using an electrical signal changing according to an amount of light applied to the photo diode. That is, the photo sensor may calculate the coordinates of a detection target according to the amount of change in light and through this, may obtain the position information of the detection target.

The display unit 151 may display (output) information processed in the mobile terminal 100. For example, the display unit 151 may display execution screen information of an application program running on the mobile terminal 100 or user interface (UI) and graphic user interface (GUI) information according to such execution screen information.

Additionally, the display unit 151 may be configured as a three-dimensional display unit displaying a three-dimensional image.

A three-dimensional display method, for example, a stereoscopic method (a glasses method), an autostereoscopic (no glasses method), a projection method (a holographic method) may be applied to the three-dimensional display unit.

The sound output unit 152 may output audio data received from the wireless communication unit 110 or stored in the memory 170 in a call signal reception or call mode, a recording mode, a voice recognition mode, or a broadcast reception mode. The sound output unit 152 may output a sound signal relating to a function (for example, a call signal reception sound and a message reception sound) performed by the mobile terminal 100. The sound output unit 152 may include a receiver, a speaker, and a buzzer.

The haptic module 153 generates various haptic effects that a user can feel. A representative example of a haptic effect that the haptic module 153 generates is vibration. The intensity and pattern of vibration generated by the haptic module 153 may be controlled by a user's selection or a setting of a control unit. For example, the haptic module 153 may synthesize and output different vibrations or output different vibrations sequentially.

The haptic module 153 may generate various haptic effects, for example, effects by a pin arrangement moving vertical to a contact skin surface, injection power or suction power of air through an injection port or a suction port, rubbing a skin surface, electrode contact, stimulus of electrostatic force and effects by the reproduction of cold/warm sense by using a device absorbing or emitting heat.

The haptic module 153 may be implemented to deliver a haptic effect through a direct contact and also allow a user to feel a haptic effect through a muscle sense such as a finger or an arm. The haptic module 153 may be more than two according to a configuration aspect of the mobile terminal 100.

The optical output unit 154 outputs a signal for notifying event occurrence by using light of a light source of the mobile terminal 100. An example of an event occurring in the mobile terminal 100 includes message reception, call signal reception, missed calls, alarm, schedule notification, e-mail reception, and information reception through an application.

A signal outputted from the optical output unit 154 is implemented as a mobile terminal emits single color of multi-color to the front or the back. The signal output may be terminated when a mobile terminal detects user's event confirmation.

The interface unit 160 may serve as a path to all external devices connected to the mobile terminal 100. The interface unit 160 may receive data from an external device, receive power and deliver it to each component in the mobile terminal 100, or transmit data in the mobile terminal 100 to an external device. For example, the interface unit 160 may include a wired/wireless headset port, an external charger port, a wired/wireless data port, a memory card port, a port connecting a device equipped with an identification module, an audio I/O port, a video I/O port, and an earphone port.

Moreover, the identification module, as a chip storing various information for authenticating usage authority of the mobile terminal 100, may include a user identity module (UIM), a subscriber identity module (SIM), and a universal subscriber identity module (USIM). A device equipped with an identification module (hereinafter referred to as an identification device) may be manufactured in a smart card form. Accordingly, the identification device may be connected to the terminal 100 through the interface unit 160.

Additionally, when the mobile terminal 100 is connected to an external cradle, the interface unit 160 may become a path through which power of the cradle is supplied to the mobile terminal 100 or a path through which various command signals inputted from the cradle are delivered to the mobile terminal 100 by a user. The various command signals or the power inputted from the cradle may operate as a signal for recognizing that the mobile terminal 100 is accurately mounted on the cradle.

The memory 170 may store a program for an operation of the control unit 180 and may temporarily store input/output data (for example, a phone book, a message, a still image, and a video). The memory 170 may store data on various patterns of vibrations and sounds outputted during a touch input on the touch screen.

The memory 170 may include at least one type of storage medium among flash memory type, hard disk type, Solid State Disk (SSD) type, Silicon Disk Drive (SDD) type, multimedia card micro type, card type memory (for example, SD or XD memory type), random access memory (RAM) type, static random access memory (SRAM) type, read-only memory (ROM) type, electrically erasable programmable read-only memory (EEPROM) type, programmable read-only memory (PROM) type, magnetic memory type, magnetic disk type, and optical disk type. The mobile terminal 100 may operate in relation to a web storage performing a storage function of the memory 170 on Internet.

Moreover, as mentioned above, the control unit 180 may control operations relating to an application program and overall operations of the mobile terminal 100 in general. For example, if a state of the mobile terminal 100 satisfies set conditions, the control unit 180 may execute or release a lock state limiting an output of a control command of a user for applications.

Additionally, the control unit 180 may perform a control or processing relating to a voice call, data communication, and a video call may perform pattern recognition processing for recognizing handwriting input or drawing input on the touch screen as a text and an image, respectively. Furthermore, the control unit 180 may use at least one or a combination of the above components to perform a control in order to implement various embodiments described below on the mobile terminal 100.

The power supply unit 190 may receive external power or internal power under a control of the control unit 180 and may then supply power necessary for an operation of each component. The power supply unit 190 includes a battery. The battery is a rechargeable built-in battery and may be detachably coupled to a terminal body in order for charging.

Additionally, the power supply unit 190 may include a connection port and the connection port may be configured as one example of the interface unit 160 to which an external charger supplying power for charging of the battery is electrically connected.

As another example, the power supply unit 190 may be configured to charge a battery through a wireless method without using the connection port. In this case, the power supply unit 190 may receive power from an external wireless power transmission device through at least one of an inductive coupling method based on a magnetic induction phenomenon, and a magnetic resonance coupling method based on an electromagnetic resonance phenomenon.

Moreover, various embodiments below may be implemented in a computer or device similar thereto readable medium by using software, hardware, or a combination thereof.

Hereinafter, embodiments related to a control method implementable in the mobile terminal configured as described above will be described with reference to the accompanying drawings. It is obvious to those skilled in the art that the present invention may be embodied in other specific forms without departing from the spirit or essential characteristics thereof.

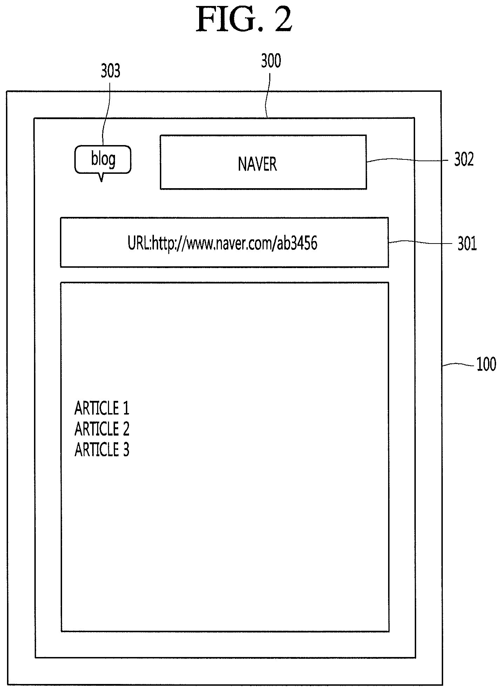

Hereinafter, a method for recommending a related web page according to an embodiment of the present invention will be described with reference to Figs. 2 to 32.

Hereinafter, a web page according to an embodiment of the present invention will be described.

Fig. 2 is a view illustrating the mobile terminal in which a web page is displayed according to an embodiment of the present invention.

Referring to Fig. 2, the controller 180 may execute an Internet application (app), and control the touch screen 151 to display at least one web page 300 through the executed Internet app.

The web page 300 may include page address information 301, page title information 302, and page icon information 303, but the present invention is not limited thereto.

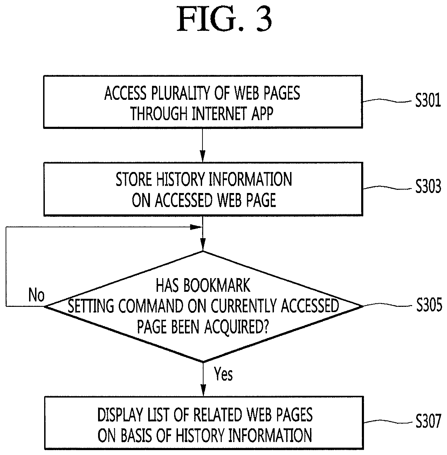

Hereinafter, a bookmark setting method according to an embodiment of the present invention will be described with reference to Fig. 3.

Fig. 3 is a flowchart illustrating a control method of the mobile terminal according to an embodiment of the present invention.

Referring to Fig. 3, when an execution command of an Internet app is input, the controller 180 accesses one or more web pages included in a server corresponding to the Internet app through the wireless Internet module 113 (S301).

The controller 180 may access each web page 300 through the Internet app, and control the touch screen 151 to display the accessed web page 300.

The controller 180 may display each web page 300 accessed through the Internet app but also display web page information 301, 302, or 303 related to the accessed web page 300.

The web page information may be defined as information representing a content of each web page 300. The web page information may include a web page title, web page address information (URL), or a web page screen, but the present invention is not limited thereto.

When each web page 300 is accessed, the controller 180 may access each web page 300 through page address information (URL) of each web page 300.

In addition, when each web page 300 is accessed, the controller 180 may access another web page using link information of one web page.

When each of a plurality of web pages 300 is accessed through the Internet app, the controller 180 may acquire history information (or access record information) including a record that each web page 300 was accessed through the Internet app, and a detailed description of the history information will be described later.

In addition, when each web page 300 is accessed, the controller 180 may acquire hypertext markup language (HTML) information of each web page 300, and a detailed description of the HTML information will be described later.

If each web page is accessed, the controller 180 stores an access record of the accessed web page in the memory 170 (S303).

After the history information on the plurality of accessed web pages are stored, if a bookmark setting command on a web page that is currently accessed and displayed by the touch screen 151 is acquired (S305), the controller 180 displays a list of one or more related pages related to a setting page to be designated as a bookmark on the basis of the history information stored in the memory 170 (S307).

Page information of each related page may be included in the list of the related pages to be displayed. In addition, address information, a page title, a page icon, or a thumbnail image of each related page may be included in the list of the related pages to be displayed.

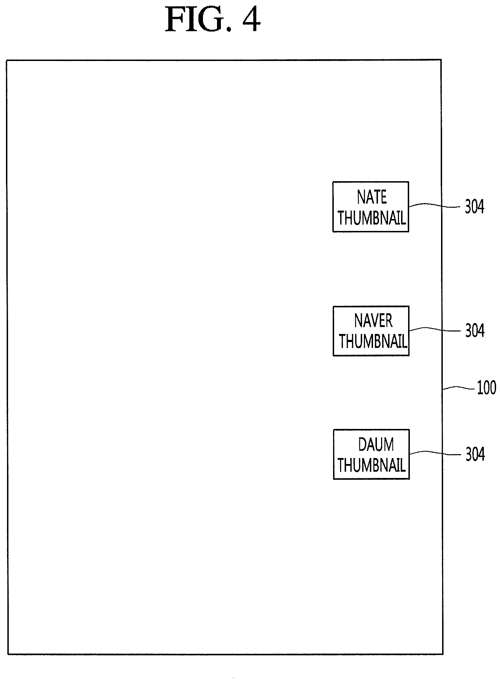

Fig. 4 is a screen on which a thumbnail image of a web page is displayed according to an embodiment of the present invention.

Referring to Fig. 4, the controller 180 may control the touch screen 151 to display a plurality of thumbnail images 304 on the touch screen 151.

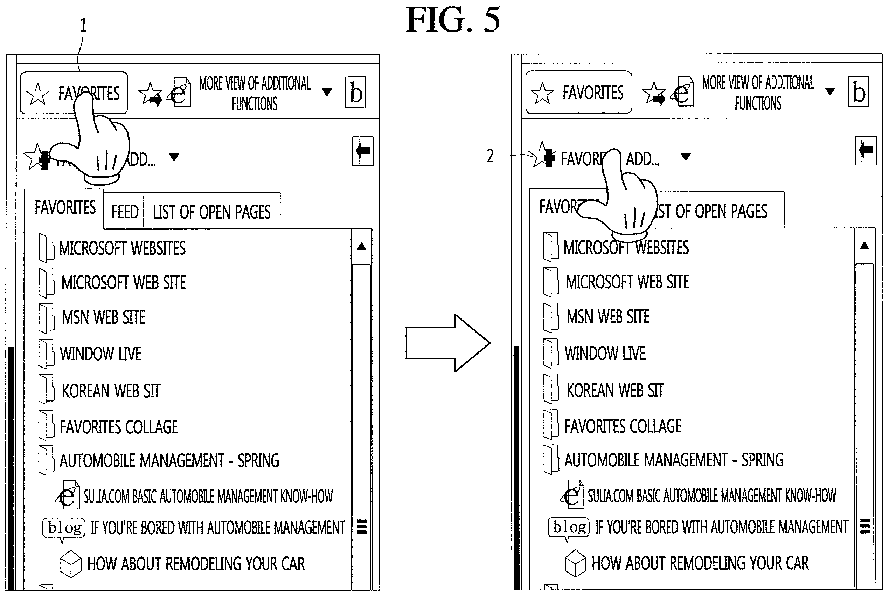

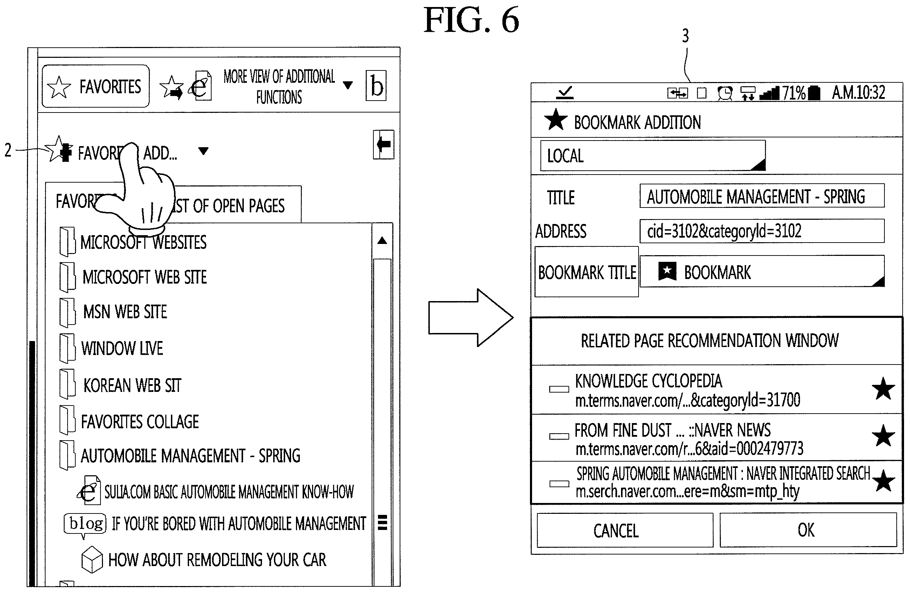

Hereinafter, a method for entering into a bookmark additional menu according to an embodiment of the present invention will be described with reference to Figs. 5 and 6.

Figs. 5 and 6 are screens illustrating a bookmark addition process according to an embodiment of the present invention.

Referring to Fig. 5, if a selection input to a bookmark display tab (favorites tab, 1) is acquired through the touch screen 151 while a currently accessed web page is being displayed, the controller 180 may control the touch screen 151 to display a bookmark addition tab (favorites addition tab, 2) and a list of pages to which one or more bookmarks are designated.

Referring to Fig. 6, if a selection input to the bookmark addition tab 2 and a page displayed in the list of the bookmark pages is acquired, the controller 180 may control the touch screen 151 to display a bookmark addition menu 3.

If the bookmark addition menu 3 is displayed through the touch screen 151, the controller 180 may add a new page to the list of the bookmark pages or delete a previously designated page, based on a specific input acquired through the touch screen 151.

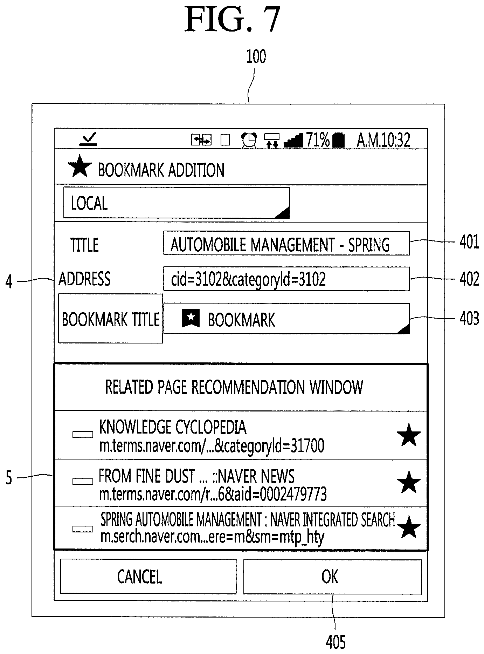

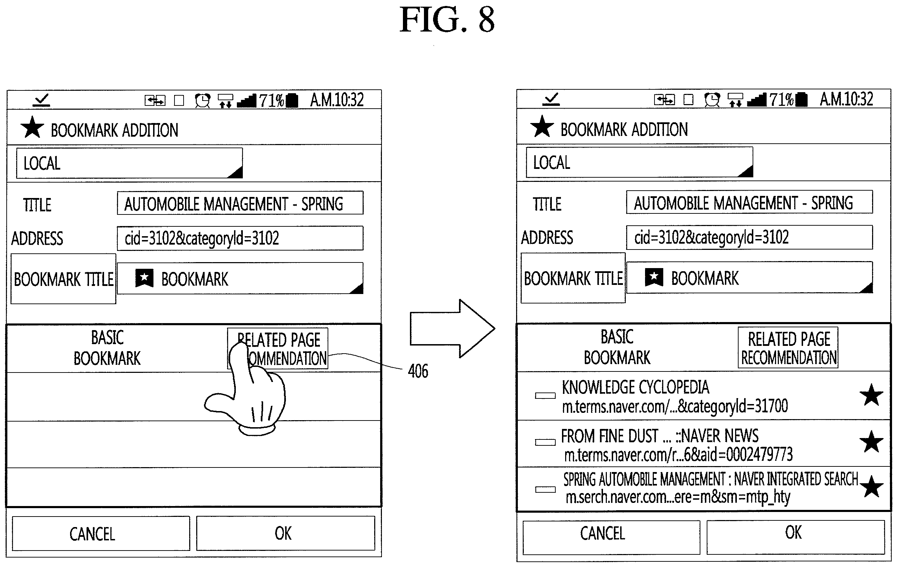

Hereinafter, the bookmark addition menu according to the embodiment of the present invention will be described in detail with reference to Figs. 7 and 8.

Fig. 7 is a screen on which a bookmark addition menu is displayed according to an embodiment of the present invention.

Fig. 8 is a screen on which a bookmark addition menu is displayed according to another embodiment of the present invention.

Referring to Fig. 7, the controller 180 displays a bookmark addition menu on the touch screen 151 of the mobile terminal 100. The bookmark addition menu includes a bookmark setting window 4 and a bookmark recommendation window 5.

The bookmark setting window 4 may include a page title item 401 of a setting page to be designated as a bookmark, an address item 402 of the setting page to be designated as the bookmark, a title item 403 of the bookmark to be set, and an OK tab 405 capable of selecting whether to store the bookmark.

The bookmark recommendation window 5 may include one or more related pages.

The controller 180 may determine one or more related pages related to the setting page among a plurality of previously accessed web pages on the basis of previously stored history information.

If one or more related pages are determined, the controller 180 may control the touch screen 151 to display the determined one or more related pages through the bookmark recommendation window 5.

Unlike Fig. 7, the controller 180 may acquire a command signal for displaying a list of related pages through the touch screen 151 and then display a list of one or more related pages.

Referring to Fig. 8, if a touch input to a related page recommendation tab 406 is acquired, the controller 180 may determine one or more related pages on the basis of previously stored history information, and display a list of the determined one or more related pages through the bookmark recommendation window 5.

If a selection input for selecting at least one related page information displayed through the bookmark recommendation window 5 shown in Figs. 7 and 8 is acquired, and the OK tab 405 is then selected, the controller 180 may integrate a selected page among the one or more related pages and a setting page to be set as a bookmark.

Meanwhile, the controller 180 may determine one or more methods for integrating one or more selected pages and a setting page to be set as a bookmark according to a specific input through the touch screen 151, and integrate a plurality of pages to be set as a bookmark according to each of the determined methods.

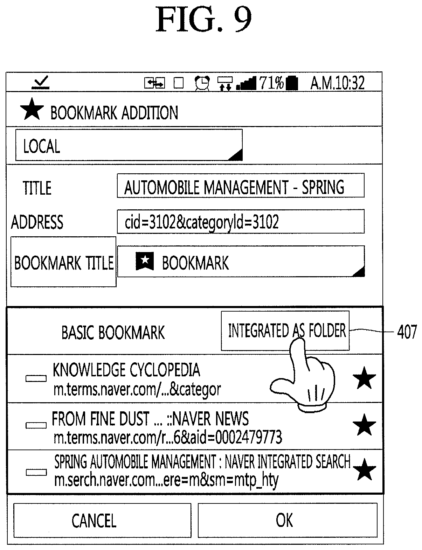

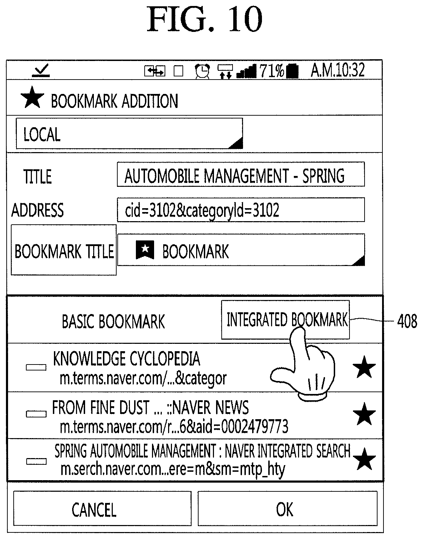

Hereinafter, a method for integrating a plurality of pages to be set as a bookmark will be described with reference to Figs. 9 and 10.

Figs. 9 and 10 are screens on which a bookmark addition window is displayed according to embodiments of the present invention.

Referring to Fig. 9, the controller 180 may display a bookmark folder creation tab ("integrated as folder" tab 407 of Fig. 9) in the bookmark recommendation window 5. If the bookmark folder creation tab 407 is selected, the controller 180 may create one bookmark folder and store a selected page and a setting page in the created bookmark folder.

Referring to Fig. 10, the controller 180 may display a bookmark chain creation tab ("integrated bookmark" tab 408 of Fig. 10) in the bookmark recommendation window 5. If the bookmark chain creation tab 408 is selected, the controller 180 may create one bookmark chain and allow a selected page and a setting page to be included in the created bookmark chain.

The bookmark chain may be defined as a bookmark item that enables a movable screen mode to be executed through only a simple operation between a plurality of selected pages. A detailed description of the bookmark chain will be described later.

Meanwhile, although not shown in Fig. 9 or 10, a selection input to the bookmark addition tab 2 is acquired without any separate input through the touch screen 151. At the same time, the controller 180 may determine one or more related pages among a plurality of previously accessed web pages on the basis of previously stored history information, and integrate the determined related page and a setting page to be set as a bookmark through a preset method.

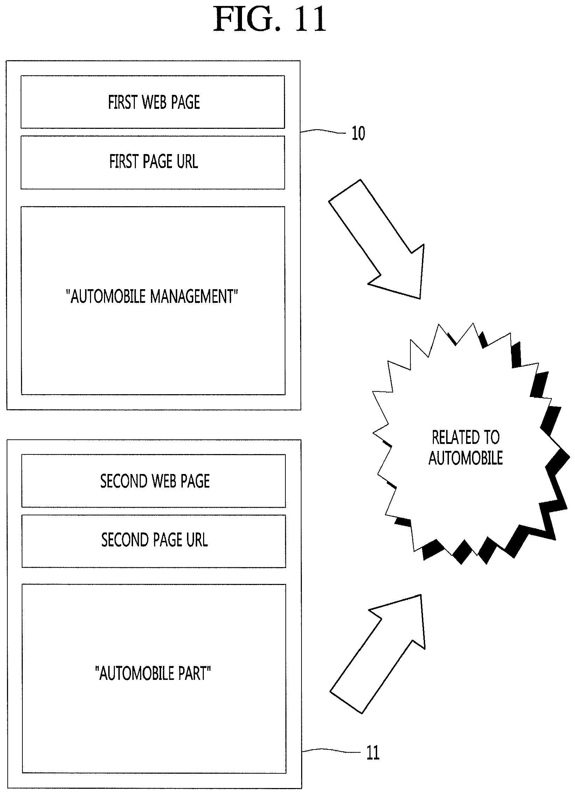

Hereinafter, a related page will be described with reference to Figs. 11 to 14.

Fig. 11 is a screen on which a web page is displayed according to an embodiment of the present invention.

Referring to Fig. 11, a first page 10 may include first page URL information and content information on "automobile management."

A second page 11 may include second page URL information and content information on "automobile part."

As shown in FIG. 11, the first page 10 including the content information on "automobile management" and the second page 11 including the content information on "automobile part" may be related pages including a common content related to "automobile."

When a page (or related page) related to a page to be set in acquisition of a bookmark setting command is determined, the controller 180 may use access record information on a plurality of previously accessed pages including the first page 10 and the second page 11, i.e., history information.

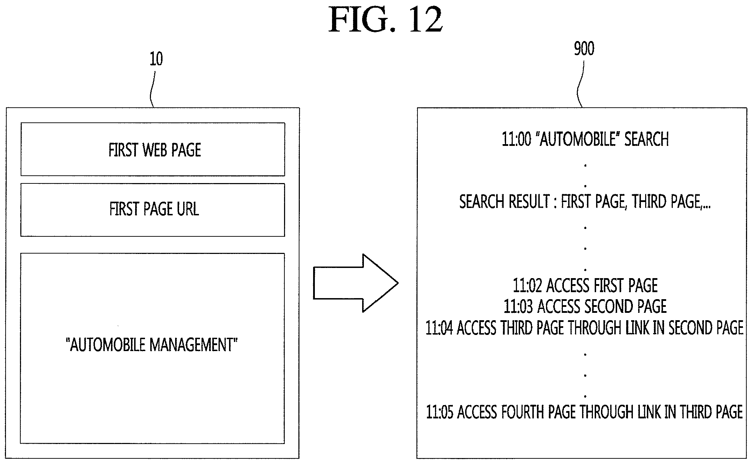

Fig. 12 is a view illustrating an operation of the mobile terminal in web page access according to an embodiment of the present invention.

Referring to Fig. 12, if the first page 10 is accessed, the controller 180 may create history information 900 using a record that the first page 10 was accessed through the Internet app.

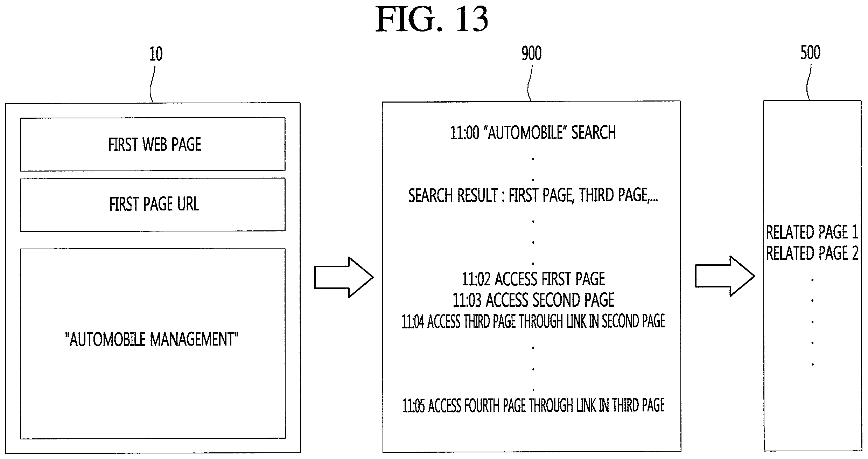

Fig. 13 is a view illustrating an operation of the mobile terminal, in which a related page is determined after web page access according to an embodiment of the present invention.

Referring to Fig. 13, whenever each of a plurality of web pages including the first page 10 is accessed, the controller 180 may create history information 900 using a record that each web page was accessed.

If a bookmark setting command on a setting page that is currently accessed and displayed is acquired after the history information 900 is created, the controller 180 may determine one or more related pages related to the setting page among the previously accessed pages, using the history information 900 including the record that each web page was accessed.

If one or more related pages are determined, the controller 180 may display a list of the one or more related pages. A relate page list 500 may be displayed to be included in the bookmark recommendation window 5 described above, but the present invention is not limited thereto.

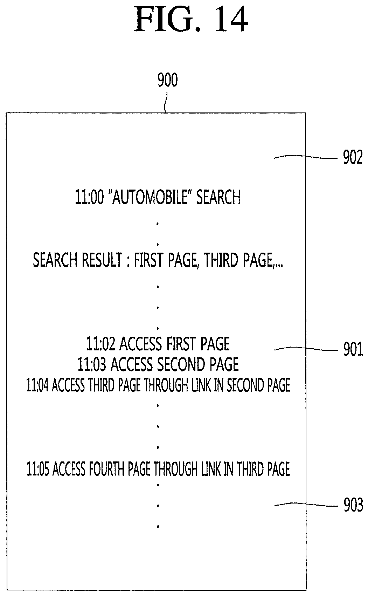

Hereinafter, the history information will be described in detail with reference to Fig. 14.

Fig. 14 is a view illustrating history information according to an embodiment of the present invention.

Referring to Fig. 14, history information 900 may be displayed. The history information 900 may include at least one of access time information 901, search word information 902, and link information 903.

According to one embodiment of the present invention, when a related page is determined, the controller 180 may decide one or more web pages accessed within a predetermined time from a time to access a setting page to be currently set as a page related to the setting page, and determine a web page accessed within the predetermined time as the related page. That is, the controller 180 may determine web pages accessed in the same time zone as pages related to each other. For example, the predetermined time may be approximately three seconds, but the present invention is not limited thereto.

The access time information 901 may include information on a time to access each page through the Internet app, including "access first page at 11:02" or "access second page at 11:03."

According to another embodiment of the present invention, the controller 180 may determine, as a related page, a web page searched by the same search word and search operation as a page to be set.

The search word information 902 may include information on a search word by which each page is searched through the Internet app, including "automobile" search.

According to still another embodiment of the present invention, the controller 180 may determine, as related pages, both one link page accessed through a link in the setting page and another page corresponding to when the setting page is accessed through a link in another page.

The link information 903 may include information on a link route along which another page is accessed from one page through the Internet app, including "access fourth page through link in third page at 11:05."

A detailed description of the access time information 901, the search word information 902, and the link information 903 will be described later.

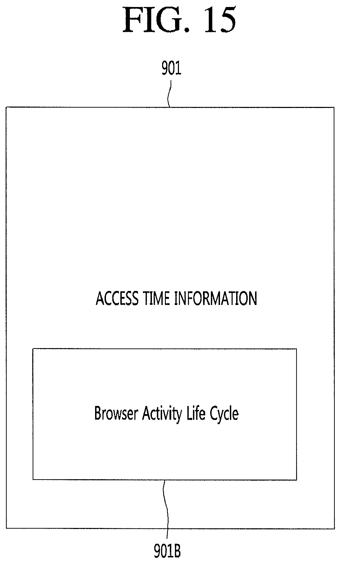

Hereinafter, a method for determining a related page using access time information will be described with reference to Figs. 15 to 17.

Fig. 15 is a view illustrating access time information according to an embodiment of the present invention.

Referring to Fig. 15, the history information (900 of Fig. 14) may include access time information 901. The access time information 901 may include browser activity life cycle information 901B.

The controller 180 may acquire information on a time at which each web page is accessed through the Internet app, using the browser activity life cycle information 901B included in the access time information 901 within the history information 900.

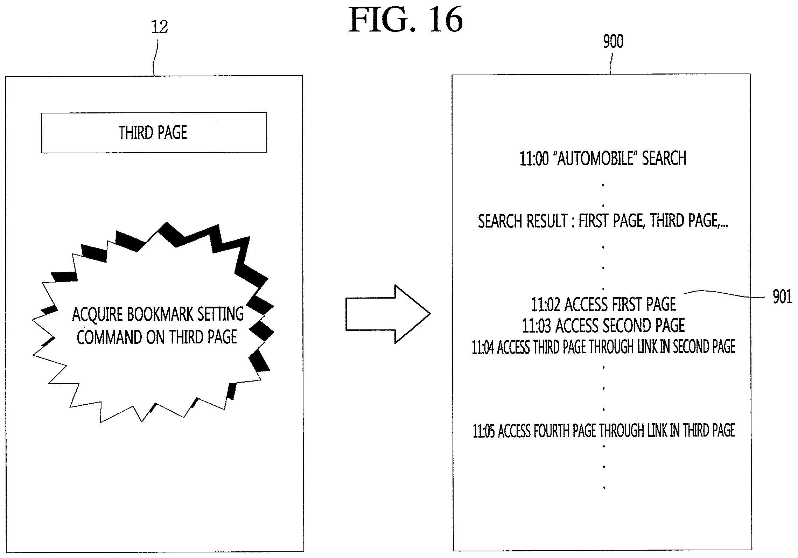

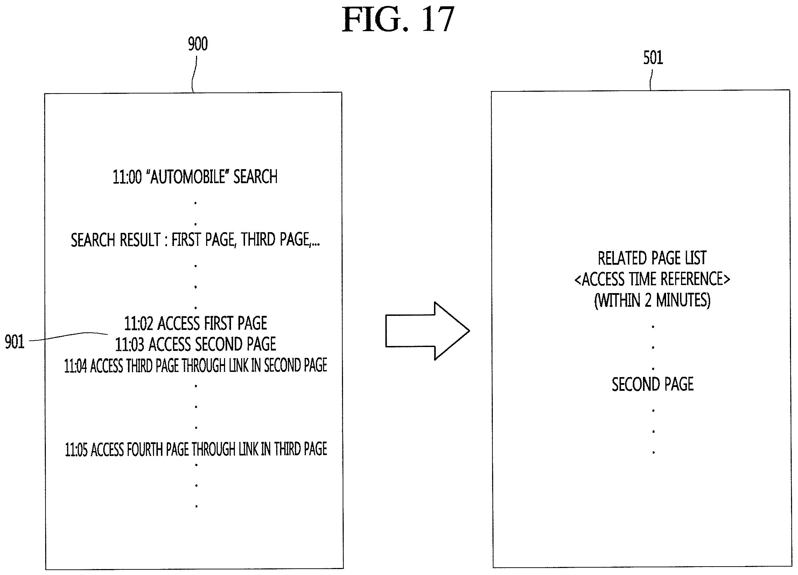

Figs. 16 and 17 are views illustrating a method for determining a related page using access time information.

Referring to Fig. 16, if a third page 12 is accessed, and a bookmark setting command on the third page 12 is then acquired, the controller 180 may acquire access time information 901 in the history information 900 from the memory 170.

The controller 180 may acquire data of "access first page at 11:02," "access second page at 11:03," and "access third page at 11:04" from the access time information 901 in the history information 900.

The controller 180 may determine one or more related pages among one or more web pages accessed through the Internet app according to a preset access condition.

The preset access condition may include an access time condition. That is, the controller 180 may determine, as related pages, one or more web pages accessed within a preset access time condition (e.g., 2 minutes).

Referring to Fig. 17, when the preset access time condition is 2, the controller 180 may acquire access time information ("access third page at 11:04") of the third page 12 that is a setting page, and determine, as a related page, a second page accessed within 1 minute (after 11:02) before the access time (11:04) of the third page 12.

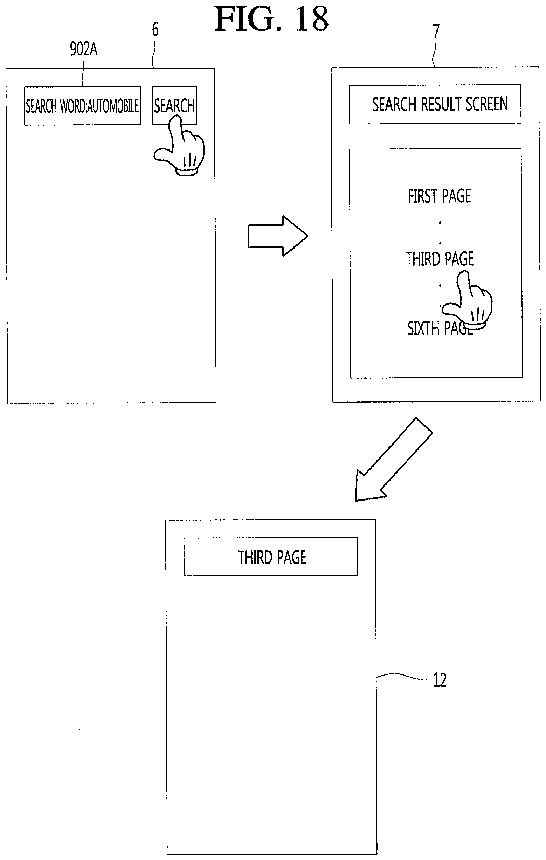

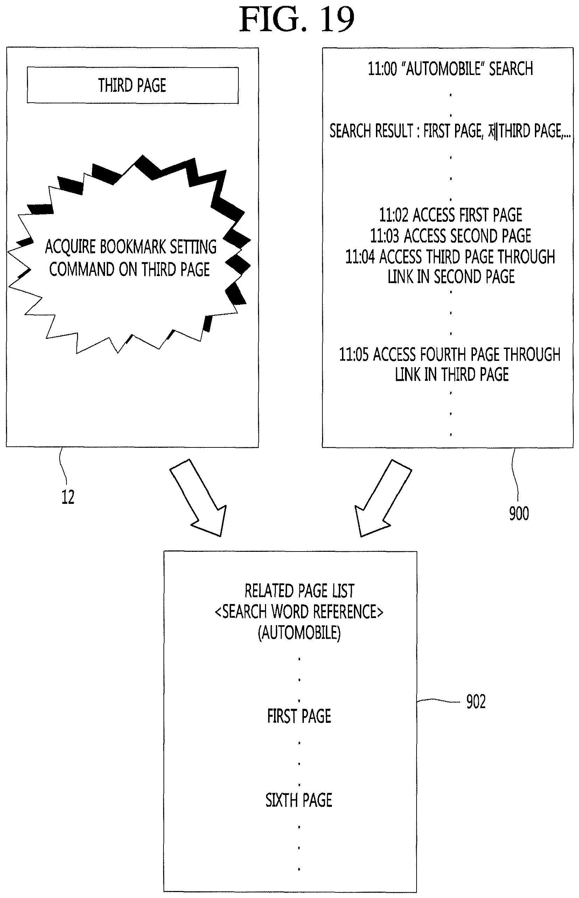

Hereinafter, a method for determining a related page using search word information in history information will be described with reference to Figs. 18 and 19.

Fig. 18 is a view illustrating an operation of searching a list of a plurality of pages and selecting one page through a search word input and search operation. Fig. 19 is a view illustrating an operation of determining pages having the same search word as related pages.

Referring to Fig. 18, if an "automobile" (search word 902A) is input through a search window 6 in the Internet app, and a search command is then input, the controller 180 may display a search result screen 7 and display a list of a plurality of web pages including a "first page," a "third page," and a "sixth page," which are searched through a search operation in the search result screen 7.

If a the "third page" (one page) item is selected in the list of the plurality of web pages, the controller 180 may display, on a screen, a third page 12 that is a web page corresponding to the selected "third page" item.

In Fig. 18, the first page, the third page, and the sixth page, which are searched through the search word "automobile," may be pages related to one another.

Referring to Fig. 19, if the third page 12 is accessed, and a bookmark setting command on the third page 12 is then acquired, the controller 180 may acquire search word information 902 in the history information 900, and determine, as related pages, the first page and the sixth page, which are searched by the same search word ("automobile") as the third page 12 that is a setting page, based on the acquired search word information 902.

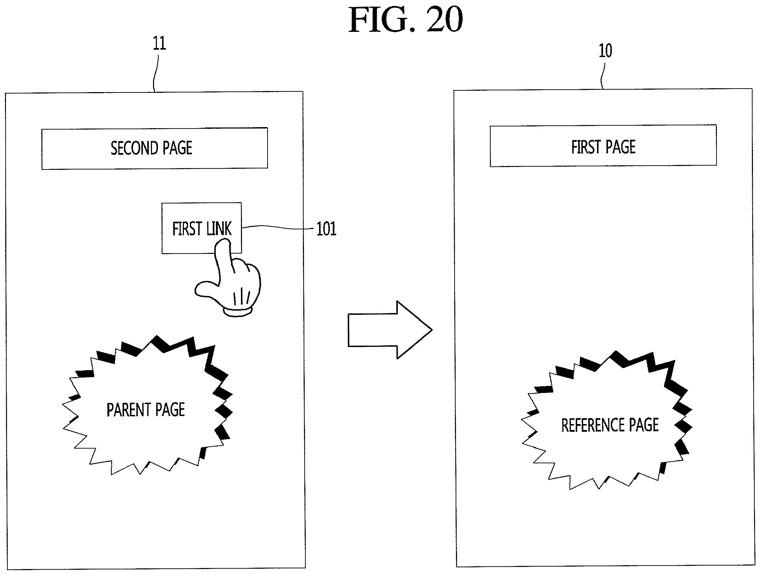

Hereinafter, a method for determining a related page using link access information will be described with reference to Figs. 20 to 23.

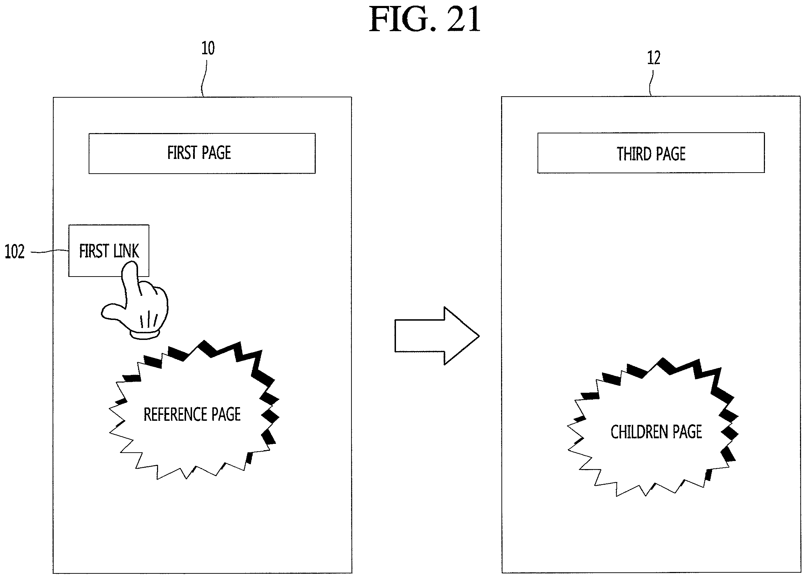

Fig. 20 is a view illustrating a parent page and a reference page according to an embodiment of the present invention, and Fig. 21 is a view illustrating a reference page and a children page according to an embodiment of the present invention.

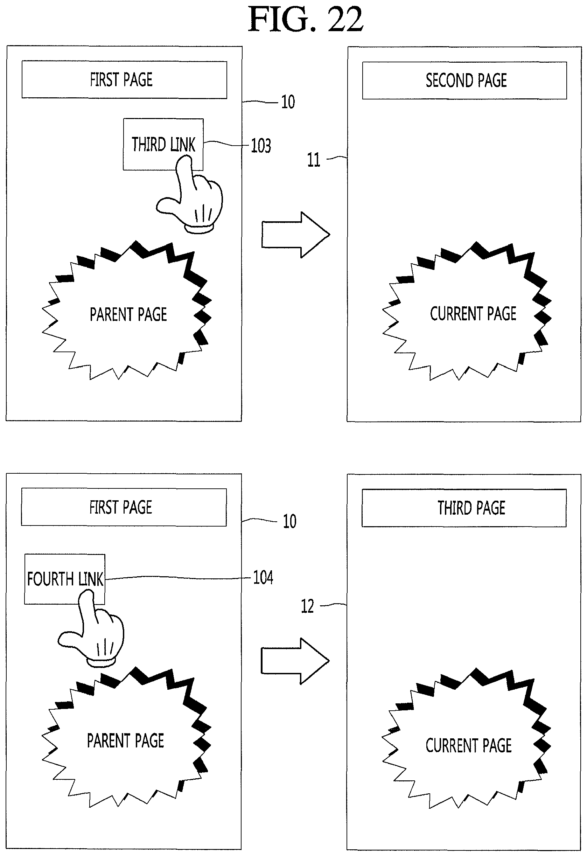

Fig. 22 is a view illustrating a reference page, a parent page, and a sibling page according to an embodiment of the present invention.

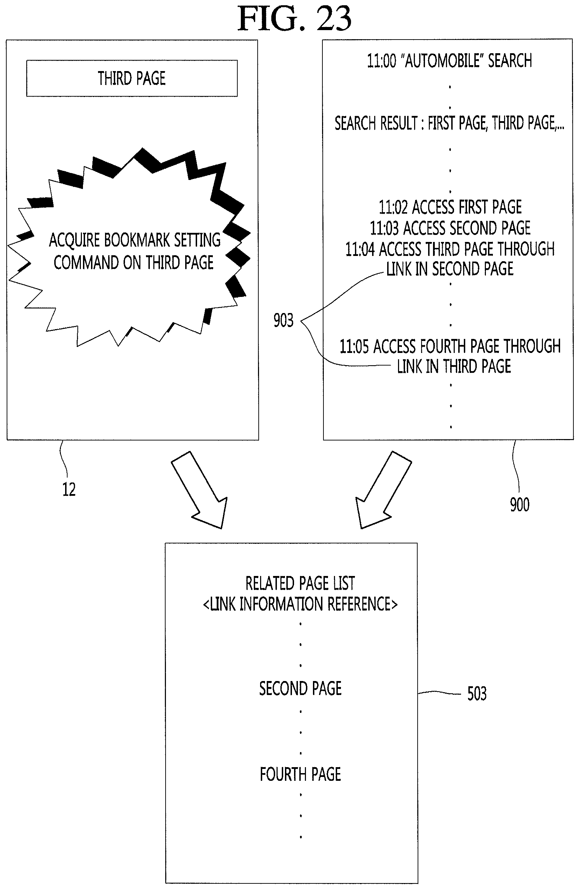

Fig. 23 is a view illustrating an operation of determining a related page on the basis of link access information according to an embodiment of the present invention.

The link access information may include information on relations between a plurality of pages.

Referring to Fig. 20, if a first page 10 is displayed through a first link 101 in a second page 11, the second page 11 may be defined as a parent page of the first page 10.

Referring to Fig. 21, if a third page 12 is displayed through a second link 102 of the first page 10, the third page 12 may be defined as a children page of the first page 10.

Referring to Fig. 22, if the second page 11 is displayed through a third link 103 of the first page 10, and the third page 12 is displayed through a fourth link 104 of the first page 10, the first page 10 may be defined as a parent page of the second page 11, and the third page 12 may be defined as a sibling page of the second page 11. Each of the first to fourth links 101 to 104 may be displayed in a specific area of each page, but the present invention is not limited thereto.

Referring to Fig. 23, if the third page 12 is accessed, and a bookmark setting command on the third page 12 is then acquired, the controller 180 may acquire link access information including data 903 on "access third page through link in second page at 11:04" and "access fourth page through link in third page at 11:05" in the history information 900.

If the link access information including the data 903 on "access third page through link in second page at 11:04" and "access fourth page through link in third page at 11:05" is acquired, the controller 180 may determine the second and fourth pages as related pages.

As described above, the controller 180 may determine a related page, based on one condition among the access time information 901, the search word information 902, and the link access information 903 in the history information 900. Alternatively, the controller 180 may determine a related page, based on a combination of one or more conditions among the access time information 901, the search word information 902, and the link access information 903 in the history information 900, but the present invention is not limited thereto.

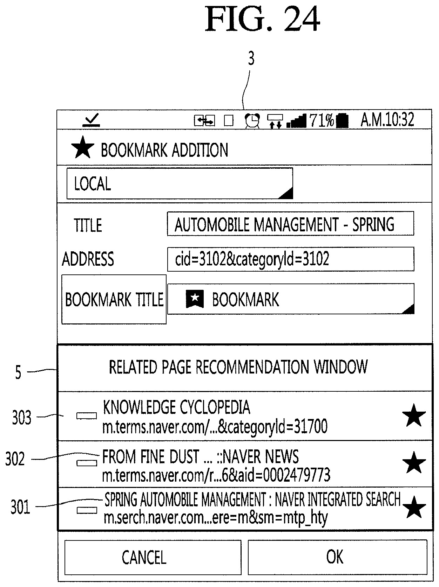

Hereinafter, a method for displaying a related page will be described with reference to Figs. 24 to 27.

Fig. 24 is a screen on which a bookmark addition menu is displayed according to an embodiment of the present invention.

Referring to Fig. 24, if one or more related page is determined based on the history information 900, the controller 180 may display a list of page information 301, 302, and 303 of the related pages in the bookmark addition window 5 within the bookmark addition menu 3.

The controller 180 may display the page address information 301, the page title information 302, and the page icon information 303 of each of the related pages, or may display one or more page information.

Meanwhile, the controller 180 may differently display page information lists according to relation degrees between the respective determined related pages and a setting page.

Hereinafter, a method for differently displaying page information lists according to relation degrees between related pages and a setting page.

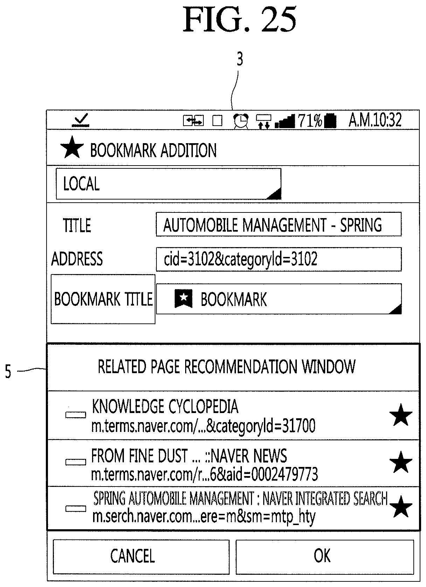

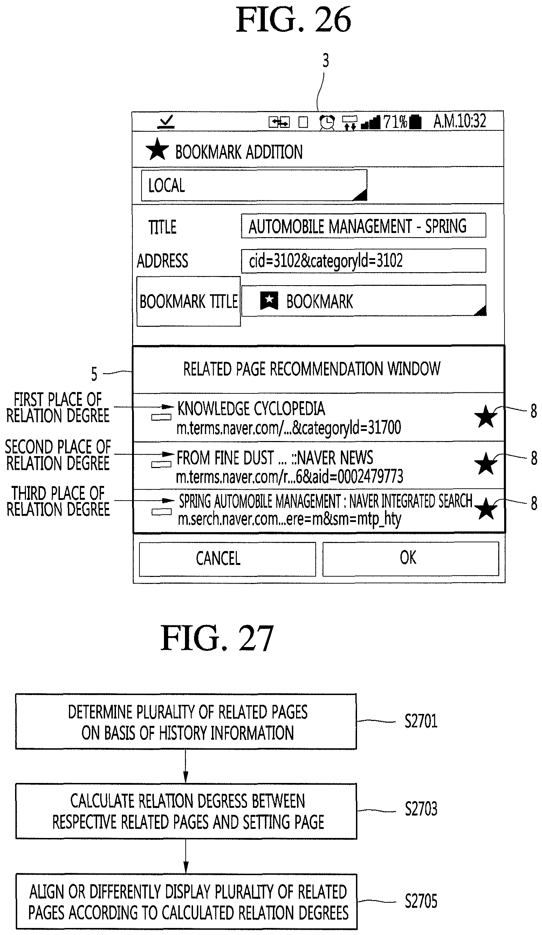

Figs. 25 and 26 are screens on which related page information are differently displayed according to relation degrees between related pages and a setting page.

Referring to Fig. 25, the controller 180 may determine relation degrees between web pages and a setting page, and differently display colors of web page information according to the determined relation degrees.

Referring to Fig. 26, the controller 180 may determine relation degrees between web pages and a setting page, and display web page information in descending order within a list of the related pages according to the determined relation degrees.

Hereinafter, a method for aligning related pages according to determined relation degrees will be described in detail with reference to Figs. 27 to 31.

Fig. 27 is a flowchart illustrating a method for aligning and displaying related pages according to relation degrees between the related pages and a setting page according to an embodiment of the present invention.

Referring to Fig. 27, the controller 180 may determine a plurality of related pages on the basis of the history information 900 (S2701).

If the plurality of related pages are determined, the controller 180 may calculate relation degrees between the respective related pages and a setting page (S2703).

If the relation degrees between the respective related pages and the setting page are calculated, the controller 180 may align or differently display the plurality of related pages according to the calculated relation degrees (S2705).

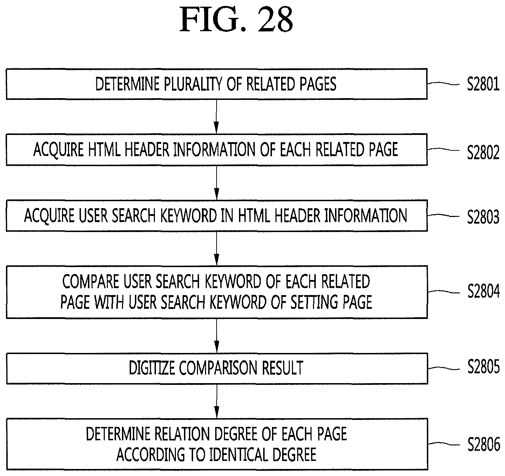

Fig. 28 is a flowchart illustrating a method for determining a relation degree according to an embodiment of the present invention.

Referring to Fig. 28, the controller 180 may determine a plurality of related pages (S2801), and acquire HTML header information of each page from each of the determined related pages (S2802).

If the HTML header information of each page is acquired, the controller 180 may acquire a user search keyword in the acquired HTML header information of each page (S2803).

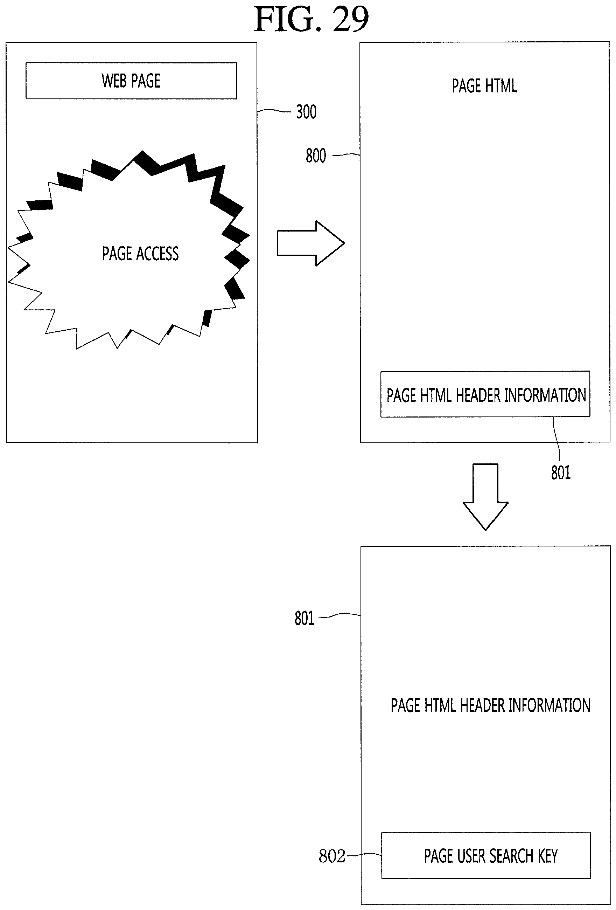

Fig. 29 is a view illustrating HTML header information according to an embodiment of the present invention.

Referring to Fig. 29, if a web page 300 is accessed through the Internet app, the controller 180 may acquire HTML header information 801 in HTML information 800 of the accessed web page 300, and acquire a user search keyword 802 in the acquired HTML header information 801.

That is, the controller 180 may acquire a user search keyword of the setting page that is a page to be set. The controller 180 may also acquire a user search keyword of the determined related page from each page.

Referring back to Fig. 28, if a user search keyword is acquired from each web page, the controller 180 may compare the user search keyword of each web page with the user search keyword of the setting page that is a page to be set (S2804), digitize a comparison result (S2805), and determine a relation degree between each related page and the setting page, based on the digitized comparison result (S2806).

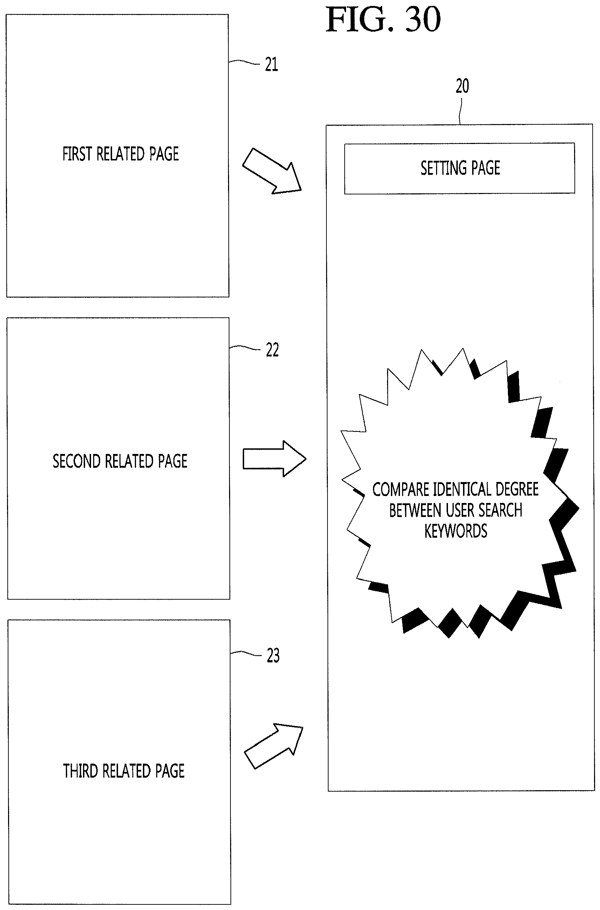

Fig. 30 is a view illustrating an operation of comparing user search keywords from respective related pages.

Referring to Fig. 30, if a first related page 21, a second related page 22, and a third related page 23 are accessed, and user search keywords are then acquired from the respective related pages 21, 22, and 23, the controller 180 may compare a user search keyword acquired from a setting page 20 with the user search keywords acquired from the first, second, and third related pages 21, 22, and 23.

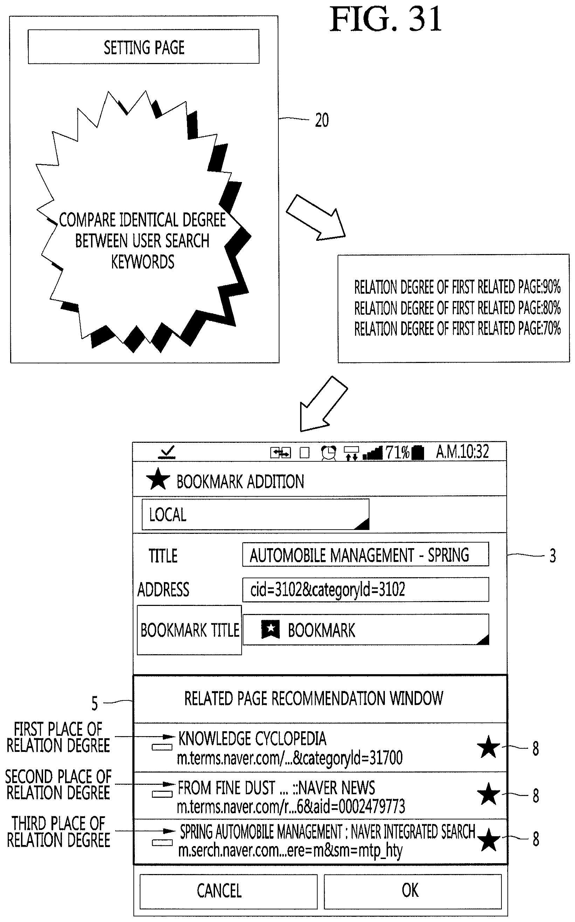

Fig. 31 is a screen on which each related page is displayed by determining a relation degree according to a result obtained by comparing user search keywords.

Referring to Fig. 31, after the user search keywords acquired from the first, second, and third related pages 21, 22, and 23 are compared with the user search keyword acquired from the setting page 20, the controller 180 may determine relation degrees (90%, 80%, and 70%) of the respective related pages 21, 22, and 23 according to a result obtained by comparing the user search keywords of the respective related pages and the setting page.

If the relation degrees (90%, 80%, and 70%) of the respective related pages 21, 22, and 23 are determined, the controller 180 may align and display a plurality of related page information in a list of the related pages in an order according to the relation degrees from the related page (first related page) having the highest relation degree to the related page (third related page) having the lowest relation degree, based on the relation degrees.

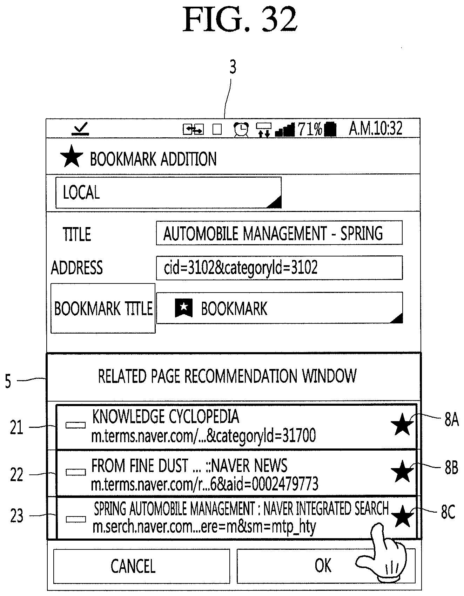

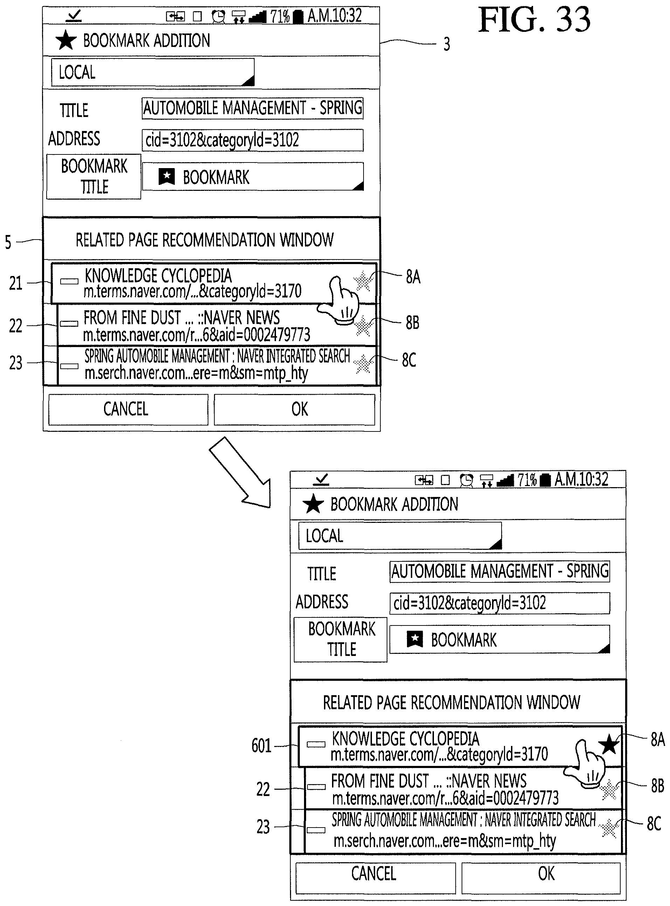

Hereinafter, a method for selecting a page to be designated as a bookmark among related pages will be described with reference to Figs. 32 and 33.

Fig. 32 is a screen on which a bookmark recommendation window is displayed according to an embodiment of the present invention, and Fig. 33 is a screen on which a selection is acquired from related pages in the bookmark recommendation window.

Referring to Fig. 32, a page information list of a plurality of related pages including the first related page 21, the second related page 22, and the third related page 23 is displayed in the bookmark recommendation window 5 within the bookmark addition menu 3.

A plurality of selection tabs including a first selection tab 8A, a second selection tab 8B, and a third selection tab 8C through which the respective related pages 21, 22, and 23 can be selected may also displayed in the information list of the plurality of related pages 21, 22, and 23.

The controller 180 may select each of the related pages 21, 22, and 23 through a selection input to each of the selection tabs 8A, 8B, and 8C on the touch screen 151.

Referring to Fig. 33, if a selection input to the first selection tab 8A on the touch screen 151 is acquired, the controller 180 may designate, as a bookmark, the first related page corresponding to the first selection tab 8A.

If the selection input to the first selection tab 8A is acquired, the controller 180 may change a color of the first selection tab 8A (e.g., change the color of the first selection tab 8A from white to red).

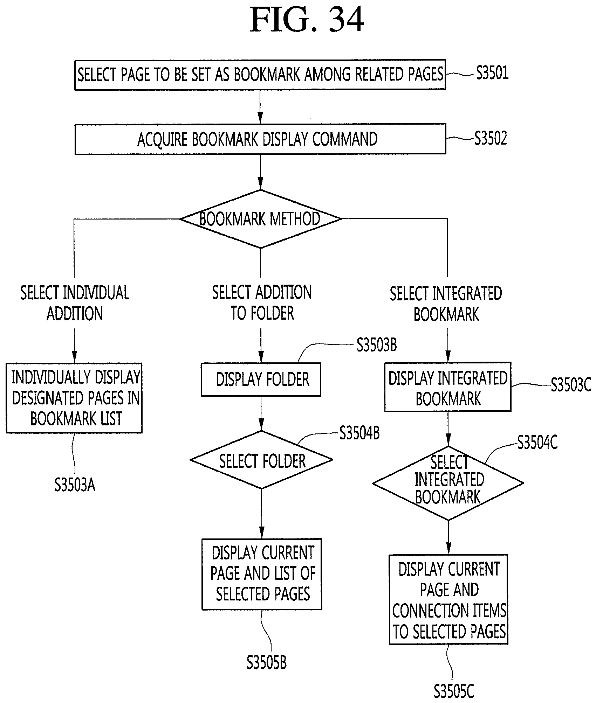

Hereinafter, a method for designating pages to be set as bookmarks and then displaying a list of the designated pages and each page will be described with reference to Fig. 34.

Fig. 34 is a flowchart illustrating a method for displaying a page designated as a bookmark according to an embodiment of the present invention.

Referring to Fig. 34, if a page to be set as a bookmark among related pages is designated (S3501), and a bookmark display command (e.g., a touch input to a bookmark display tab) is acquired (S3502), the controller 180 may decide preset bookmark methods (bookmark methods determined through the screens of Figs. 8 to 10), and display each designated page or a list of the designated pages.

When a method for adding an individual bookmark is selected, the controller 180 may display a list of bookmark designated pages in a bookmark window (S3503A).

When a method for adding a bookmark to a folder is selected, the controller 180 may create one bookmark folder and store a list of bookmark designated pages in the created bookmark folder. If the list of the designated pages is stored in the bookmark folder, and a bookmark display command is then acquired (S3502), the controller 180 may display the created bookmark folder (S3503B).

If the displayed bookmark folder is selected (S3504B), the controller 180 may display a first designated page that is a currently set page and a selected page list of related pages (S3505B).

When a method for adding a bookmark to an integrated bookmark (bookmark chain) is selected, the controller 180 may create one bookmark chain and display the created bookmark chain according to the bookmark display command (S3502) (S3503C).

If the bookmark chain is displayed and then selected (S3504C), the controller 180 may display the first designated page that is the currently set page, and display a connection item connectable to each selected designated page together with the displayed first designated page (S3505C).

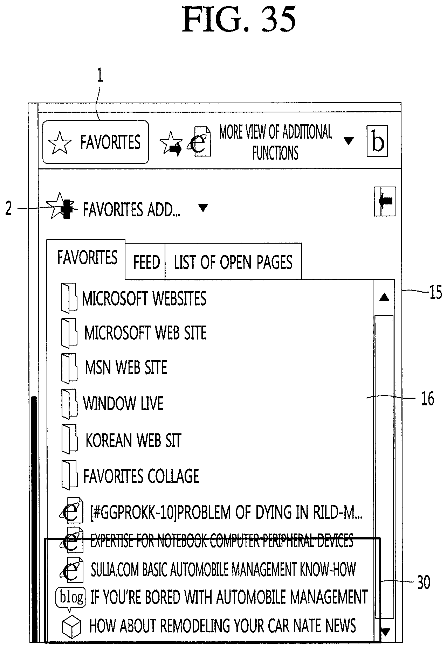

Hereinafter, a method for individually adding a bookmark and then displaying a page designated as the bookmark will be described in detail with reference to Figs. 35 to 41.

Fig. 35 is a screen on which a bookmark window is displayed according to an embodiment of the present invention.

Referring to Fig. 35, when the method for adding an individual bookmark is selected, the controller 180 may display information of each designated page (e.g., the title of each designated page) in a designated page list 30, but the present invention is not limited thereto.

The controller 180 may consecutively display information of the designated pages in the list 30 of the designated pages.

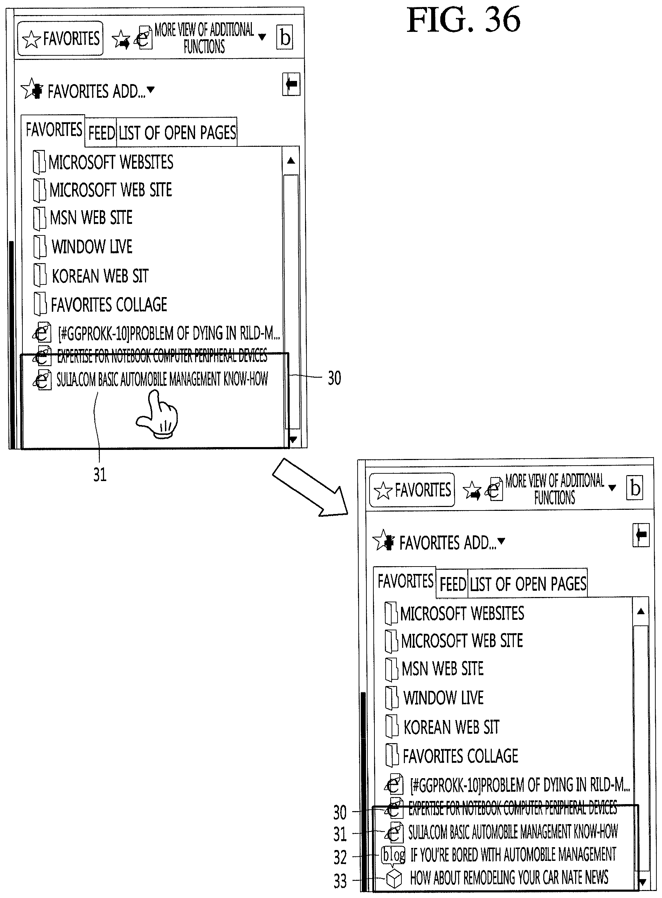

Fig. 36 a screen on which the bookmark window is displayed according to another embodiment of the present invention.

Referring to Fig. 36, the controller 180 may display a first designated page item 31 among the plurality of designated pages in the designated page list 30. If a selection input to the first designated page item 31 is acquired, the controller 180 may display a list of a second designated page item 32 and a third designated page item 33 in the designated page list 30.

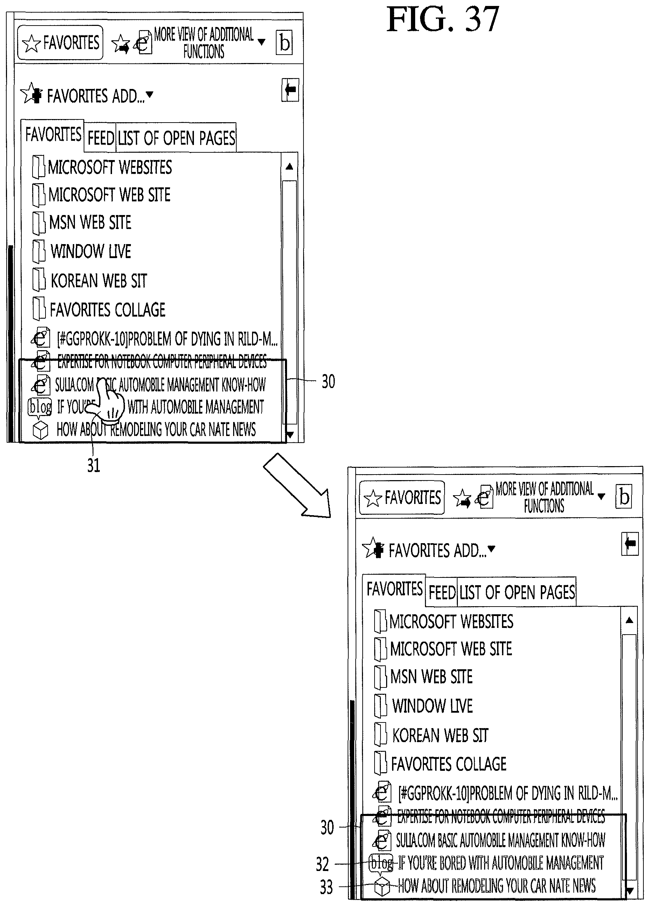

Figs. 37 to 39 are screens on which a designated page list is displayed to be distinguished in the bookmark window according to an embodiment of the present invention.

Referring to Fig. 37, if a selection input to the first designated page item 31 is acquired, the controller 180 may display the second designated page item 32 and the third designated page item 33 to be larger than before the selection input to the first designated item 31 is acquired.

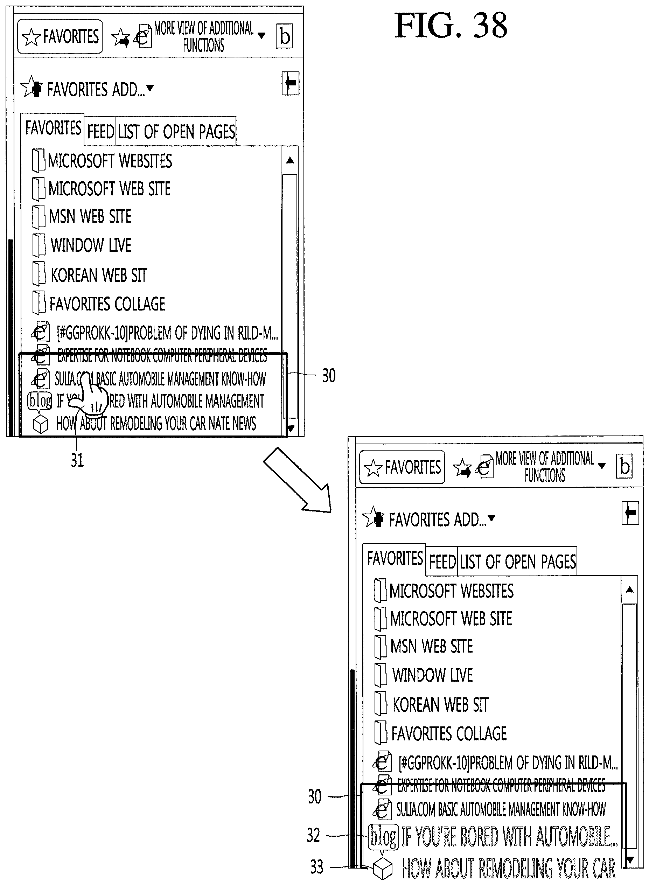

Referring to Fig. 38, if a selection input to the first designated page item 31 is acquired, the controller 180 may display the second designated page item 32 and the third designated page item 33 to be highlighted, unlike before the selection input to the first designated item 31 is acquired.

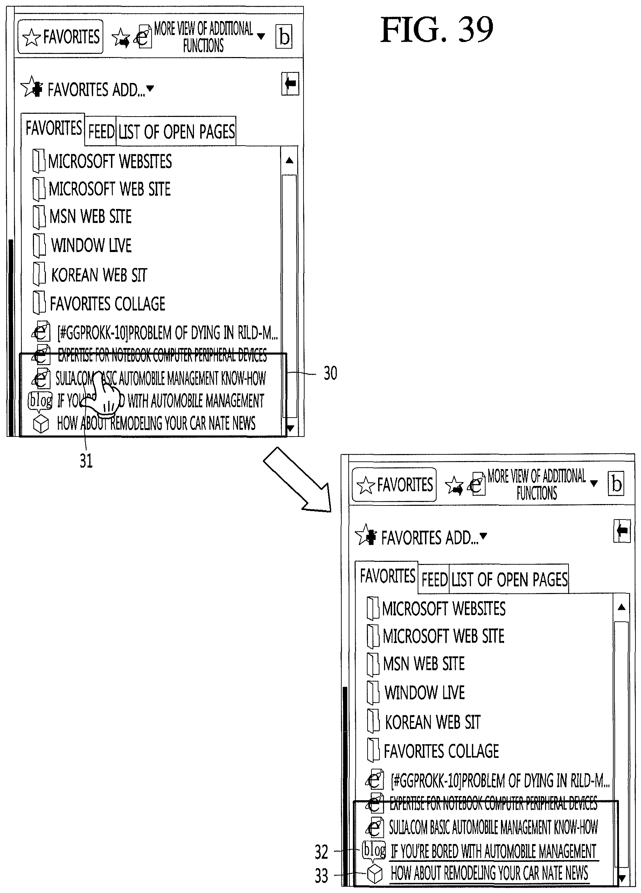

Referring to Fig. 39, if a selection input to the first designated page item 31 is acquired, the controller 180 may display the second designated page item 32 and the third designated page item 33 to be underlined, unlike before the selection input to the first designated item 31 is acquired.

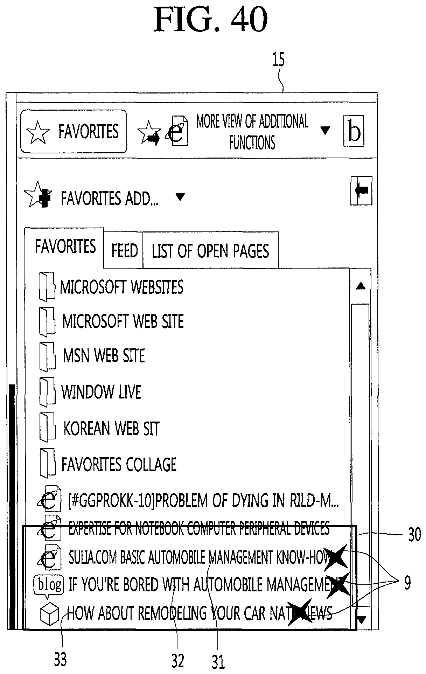

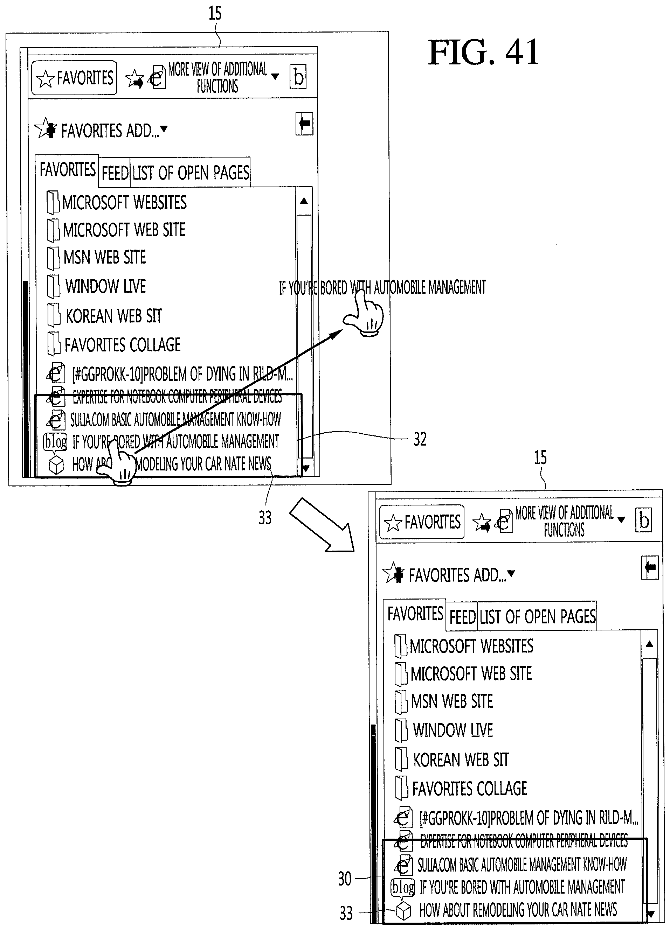

Figs. 40 and 41 are screens illustrating a method for cancelling designation of each designated page in the bookmark addition window according to an embodiment of the present invention.

Referring to Fig. 40, a plurality of "X"-shaped removal tabs 9 capable of deleting the designated pages in the designated page list may be displayed next to respective designated page items 31, 32, and 33.

Referring to Fig. 41, if a drag input to one designated page item (e.g., the second designated page item 32) is acquired, and a drop input is then acquired beyond a bookmark window 15, the controller 180 may remove, from the designated page list, a designated page corresponding to the one designated page item (second designated page item) to which the drag and drop input is acquired.

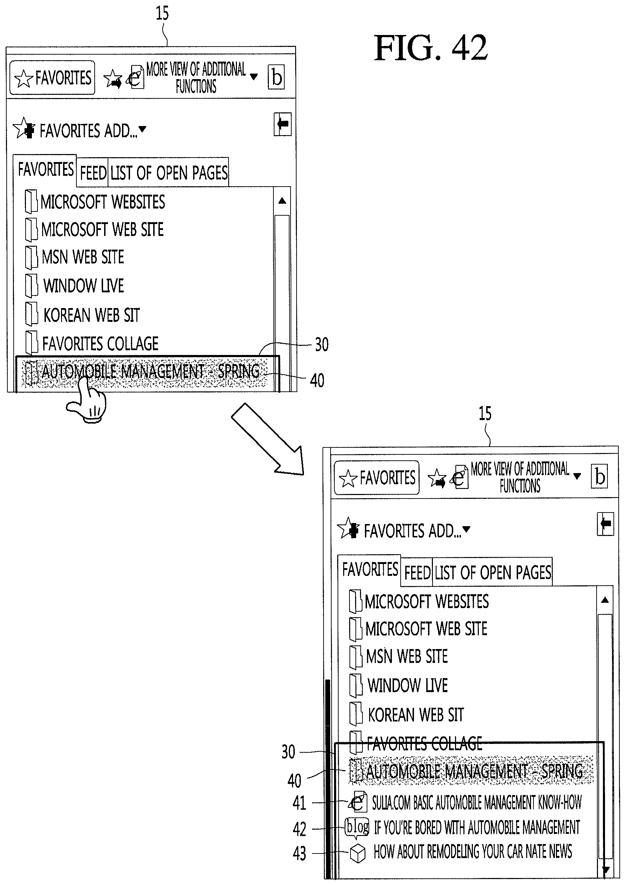

Hereinafter, a bookmark display method when bookmarks are set to be integrated in one folder will be described with reference to Figs. 42 to 44.

Fig. 42 is a screen on which a bookmark window is displayed according to an embodiment of the present invention.

Referring to Fig. 42, when bookmarks are set to be integrated in one folder, the controller 180 may display one bookmark folder 40 in the designated page list 30 displayed in the bookmark window 15.

If a selection input to the displayed bookmark folder 40 is acquired, the controller 180 may display, in the designated page list 30, a first designated page item 41, a second designate page item 42, and a third designated page item 43, which are stored in the bookmark folder 40, together with the bookmark folder 40.

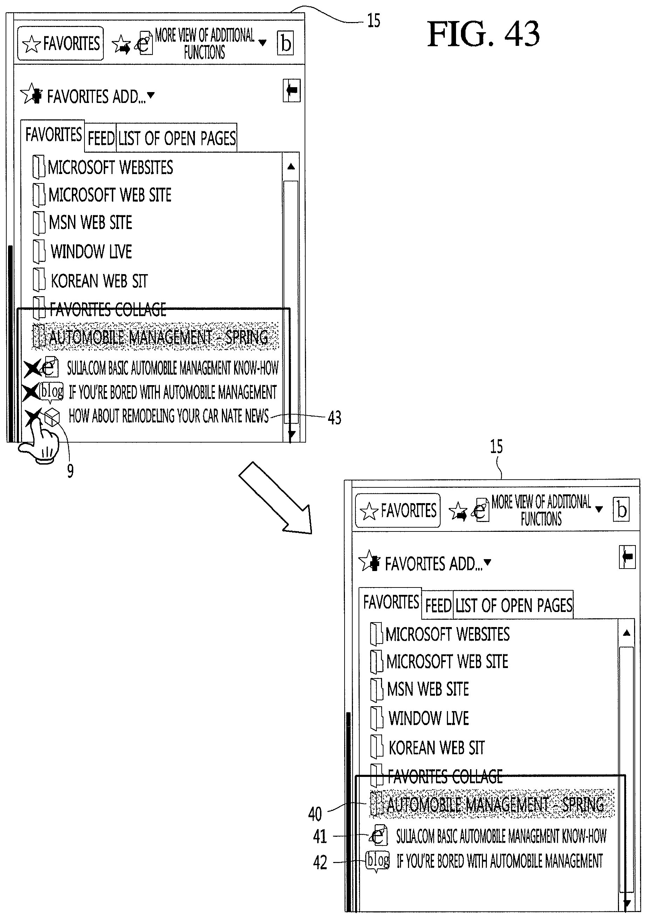

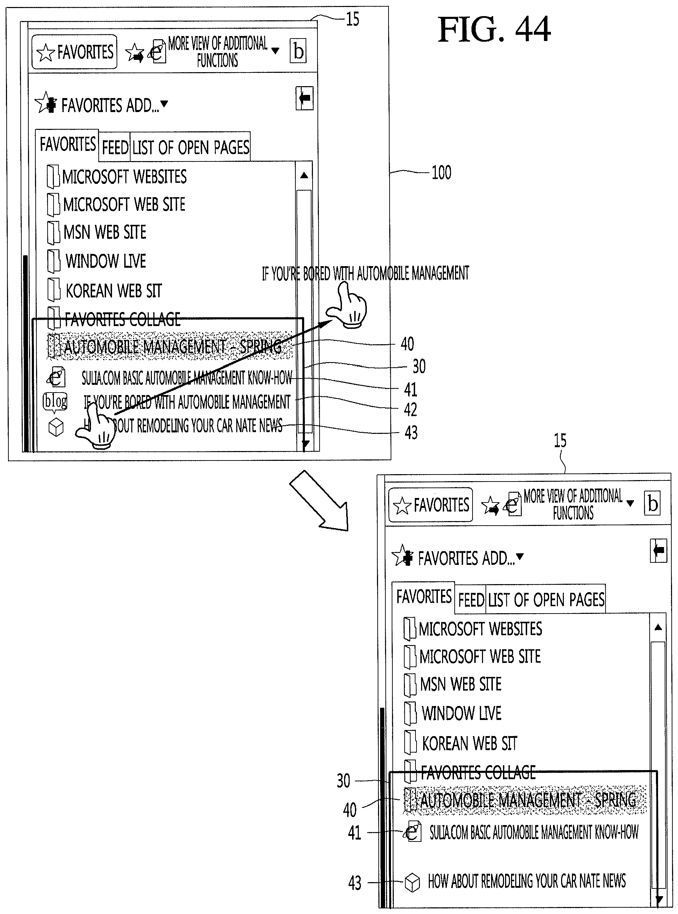

Figs. 43 and 44 are screens illustrating an operation of cancelling designation of each designated page in the bookmark window according to an embodiment of the present invention.

Referring to Fig. 43, if a selection input to a removal tab 9 displayed in the designated page list is acquired, the controller 180 may remove a designated page item (e.g., the third designated page item 43) corresponding to the selected removal tab 9 in the designated page list.

Referring to Fig. 44, if a drag input to one designated page item (e.g., the second designated page item 42) is acquired, and a drop input is then acquired beyond the bookmark window 15, the controller 180 may remove a designated page item corresponding to the designated page item (second designated page item) to which the drag and drop input is acquired in the designated page list.

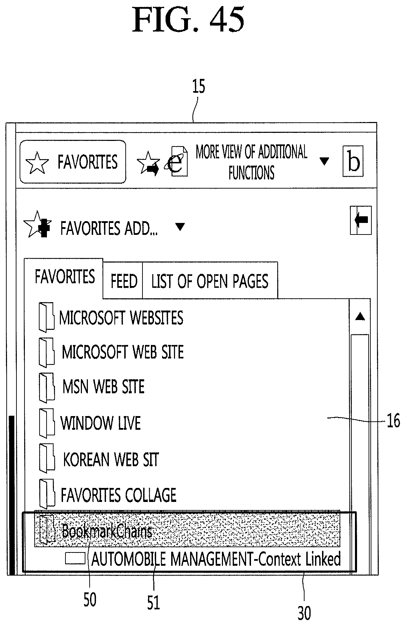

Hereinafter, a method for displaying a bookmark chain and a designated page through the bookmark chain will be described in detail with reference to Figs. 45 to 56.

Fig. 45 is a screen on which the bookmark window is displayed according to still another embodiment of the present invention.

Referring to Fig. 45, when a method for setting a plurality of designated pages through a bookmark chain is selected, the controller 180 may display a bookmark chain folder 50 in a bookmark list 16 within the bookmark window 15 according to a bookmark display command, and display a first bookmark chain 51 in the bookmark chain folder 50.

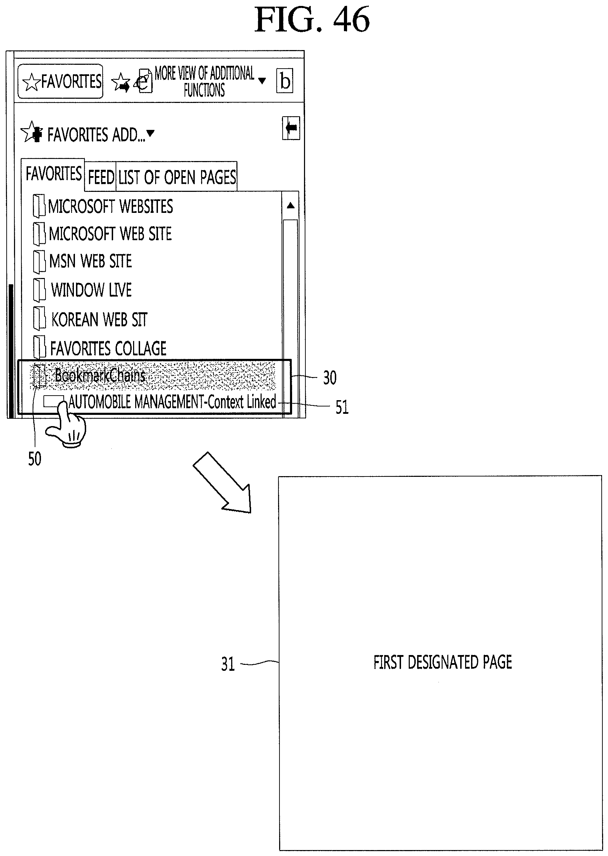

Fig. 46 is a screen illustrating an operation when a bookmark chain is selected.

Referring to Fig. 46, if a selection input to the first bookmark chain 51 in the designated page list 30 within the bookmark window 15 is acquired, the controller 180 may display a first designated page 31 among a plurality of designated pages, but the present invention is not limited thereto.

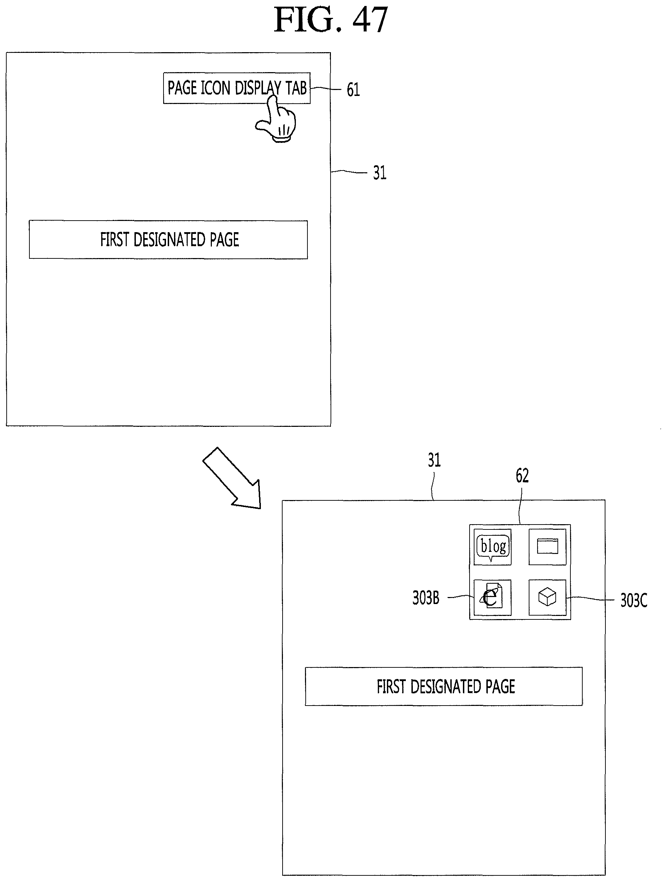

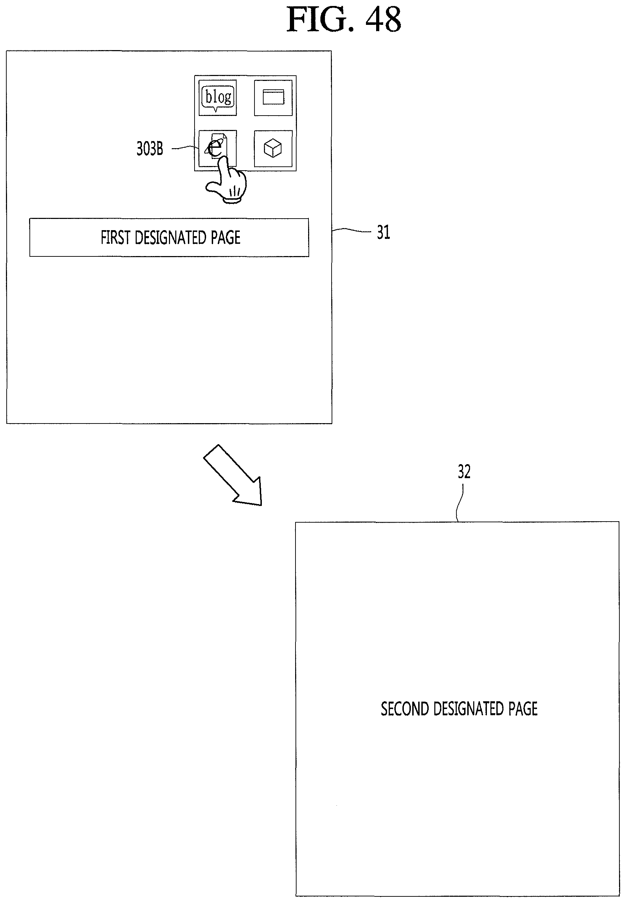

Figs. 47 and 48 are screens illustrating an operation of displaying page icons.

Referring to Fig. 47, if the first designated page is displayed through the bookmark chain, the controller 180 may display a page icon display tab 61.

If a selection input to the page icon display tab 61 is acquired, the controller 180 may display, in a page icon window 62, page icons 303B and 303C of the plurality of designated pages (second and third designated pages) except the first designated page 31.

Referring to Fig. 48, if a selection input to one 303B of the plurality of page icons 303B and 303C displayed in the page icon window 62 is acquired, the controller 180 may display one designated page (e.g., the second designated page 32) corresponding to the one page icon 303B.

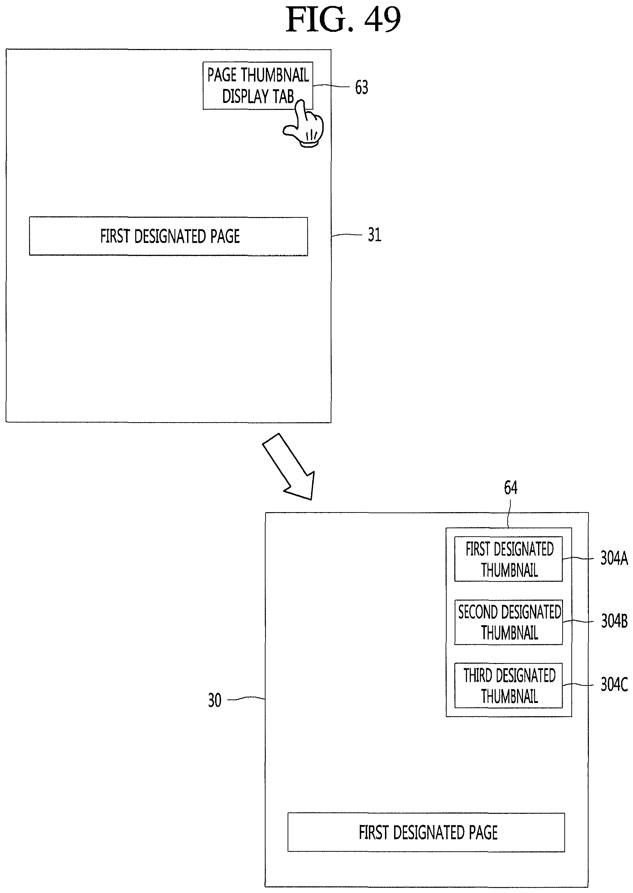

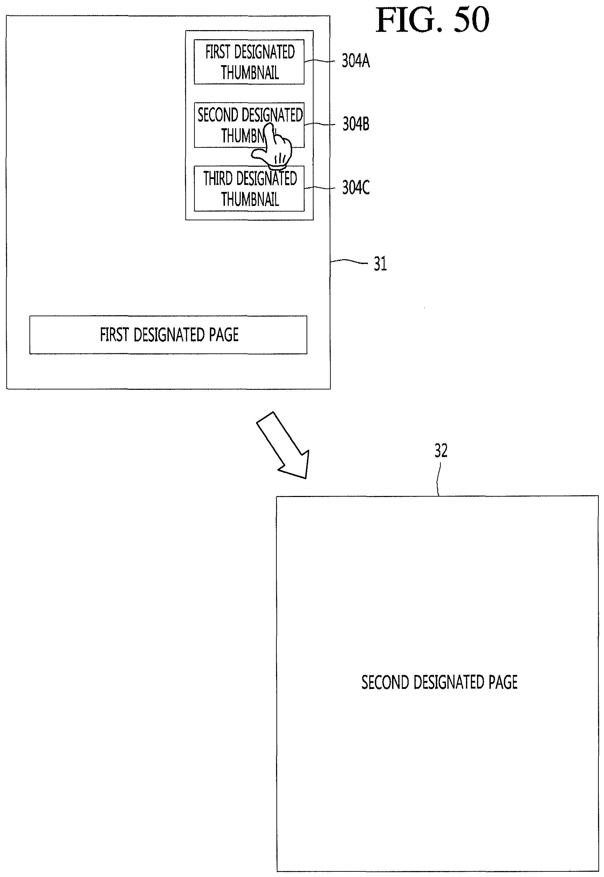

Figs. 49 and 50 are screens illustrating an operation of displaying page thumbnail images.

Referring to Fig. 49, if the first designated page 31 is displayed through the bookmark chain, the controller 180 may display a page thumbnail display tab 63.

If a selection input to the page thumbnail display tab 63 is acquired, the controller 180 may display page thumbnail images 304A, 304B, and 304C of the first designated page 31 and the plurality of designated pages (second and third designated pages) in a page thumbnail window 64.

Referring to Fig. 50, if a selection input to one page thumbnail image 304B among the plurality of page thumbnail images 304A, 304B, and 304C displayed in the page thumbnail window 64 is acquired, the controller 180 may display one designated page (e.g., the second designated page 32) corresponding to the one page thumbnail image.

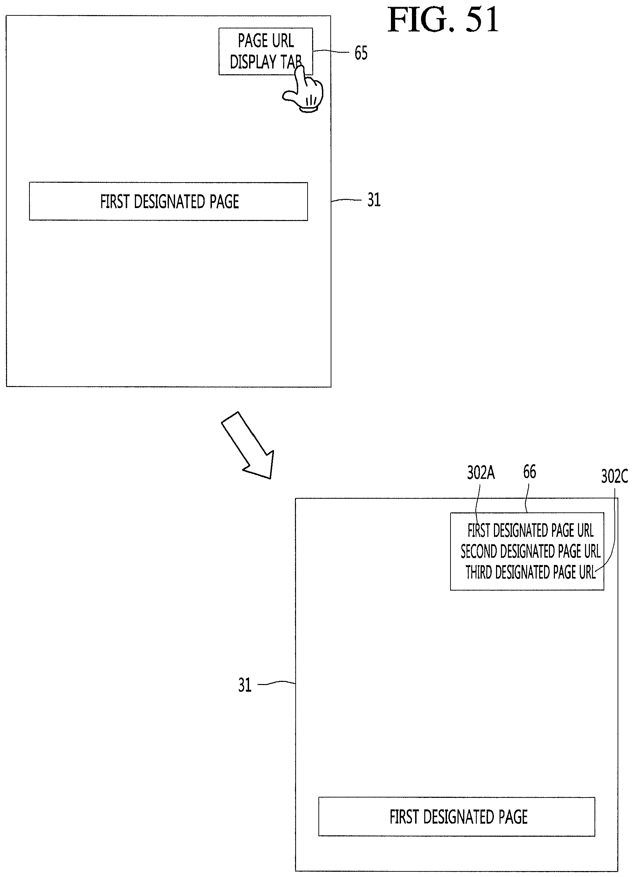

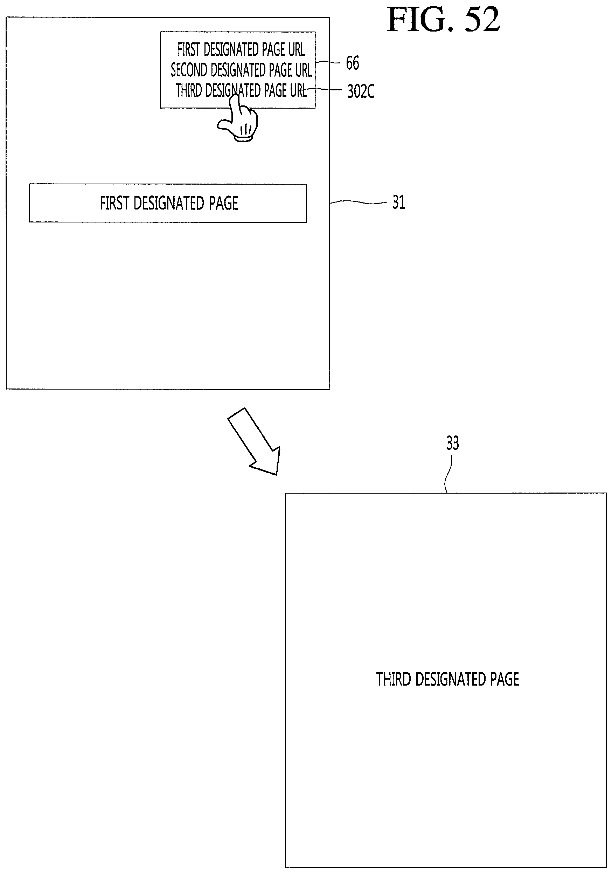

Figs. 51 and 52 are screens illustrating an operation of displaying page URLs.

Referring to Fig. 51, if the first designated page 31 is displayed through the bookmark chain, the controller 180 may display a page URL display tab 65.

If a selection input to the page URL display tab 65 is acquired, the controller 180 may display page URLs 302A, 302B, and 302C of the first designated page 31 and the plurality of designated page (second and third designated pages) in a page URL window 66.

Referring to Fig. 52, if a selection input to one (302C) of the plurality of page URLs 302A, 302B, and 302C displayed in the page URL window 66 is acquired, the controller 180 may display one designated page (e.g., the third designated page 33) corresponding to the one page URL 302C.

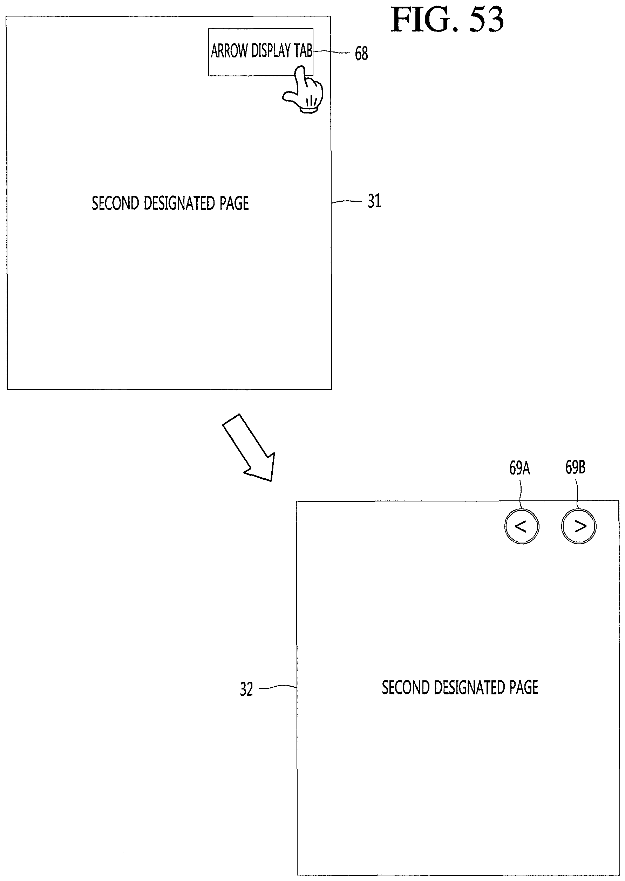

Figs. 53 to 55 are screens illustrating an operation of displaying switch tabs.

Referring to Fig. 53, if the second designated page 32 is displayed through the bookmark chain, the controller 180 may display a switch tab display menu 68.

If a selection input to the switch tab display menu 68, the controller 180 may display a first switch tab 69A and a second switch tab 69B on the touch screen 151.

The shape of the first switch tab 69A and the second switch tab 69B may be an arrow shape, but the present invention is not limited thereto. The switch tab display menu 68, as shown in Fig. 53, may include two switch tabs 69A and 69B, but the present invention is not limited thereto.

The controller 180 may change a currently displayed designated page and display the changed designated page, based on a selection input to each switch tab.

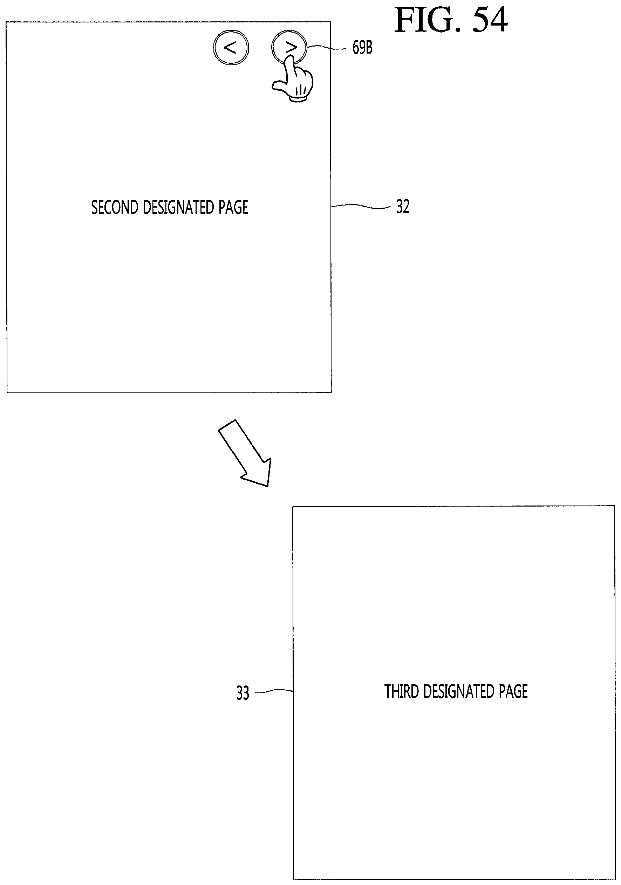

Referring to Fig. 54, when a selection input to the second switch tab 69B is acquired, the controller 180 may switch the currently displayed second designated page 32 to the third designated page 33, based on the selection input to the second switch tab 69B.

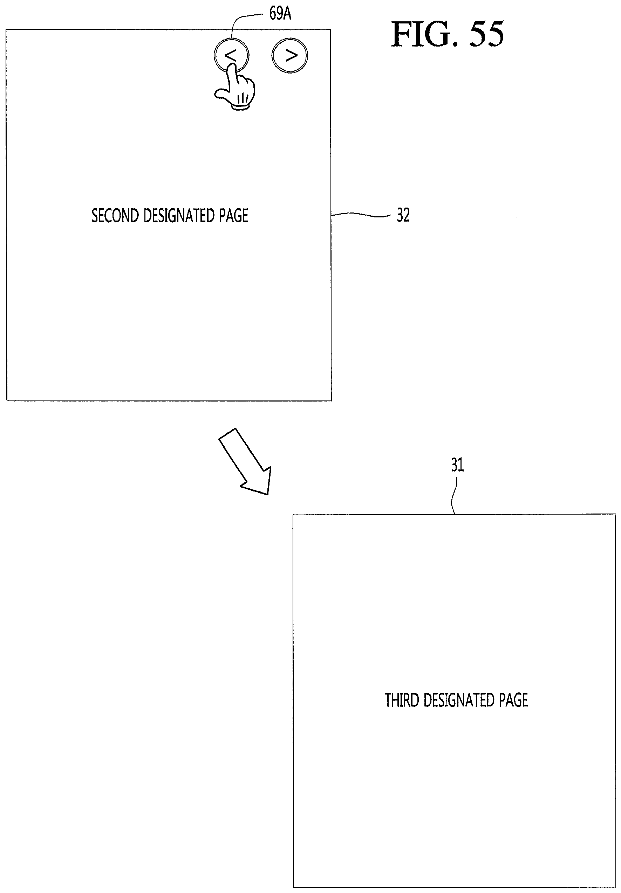

Referring to Fig. 55, when a selection input to the first switch tab 69A is acquired, the controller 180 may switch the currently displayed second designated page 32 to the first designated page 31, based on the selection input to the first switch tab 69A.

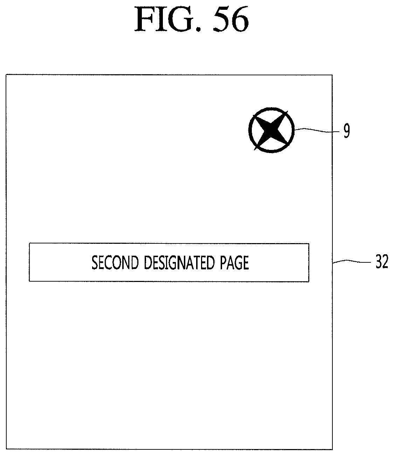

Fig. 56 is a screen illustrating an operation of cancelling designation of a designated page after entry into the bookmark chain.

Referring to Fig. 56, if a selection input to a removal tab 9 displayed together with the second designated page 32 is acquired while the second designated page 32 is being displayed after the entry into the bookmark chain, the controller 180 may remove the second designated page 32 in the bookmark chain.

The invention can also be embodied as computer readable codes on a computer readable recording medium. The computer readable recording medium is any data storage device that can store data which can be thereafter read by a computer system. Examples of the computer readable recording medium include magnetic storage media (e.g., ROM, floppy disks, hard disks, etc.) and optical recording media (e.g., CD-ROMs, or DVDs) and carrier waves (e.g., transmission through the Internet). Additionally, the computer may include the control unit 180 of a terminal. Accordingly, the detailed description is not construed as being limited in all aspects and should be considered as illustrative. The scope of the invention should be determined by reasonable interpretation of the appended claims, and all modifications within equivalent ranges of the present invention are included in the scope of the present invention.

## Claims

1. A mobile terminal comprising:
a touch screen configured to display a plurality of web pages accessed through an Internet application (app); and
a controller configured to, if a bookmark addition command on a first web page among the plurality of web pages is input, control the touch screen to display a list of one or more related pages related to the first web page among the plurality of previously accessed web pages.

2. The mobile terminal according to claim 1, wherein the controller, whenever each of the web pages is accessed, creates history information on the basis of a record that each of the web pages was accessed, and controls the touch screen to display a list of a related page determined based on the history information.

3. The mobile terminal according to claim 2, further comprising a storage unit configured to store history information on the plurality of web pages,
wherein the controller stores the created history information in the storage unit, if a bookmark setting command is acquired, acquires the stored history information from the storage unit, and determines and displays the related page on the basis of the history information.

4. The mobile terminal according to claim 2, wherein the history information includes access time information that is information on a time at which each of the web pages is accessed,
wherein the controller determines and displays the related page using the access time information.

5. The mobile terminal according to claim 4, wherein the related page includes a web page having a time at which the web page accesses the related page, which is within a predetermined time from the time at which the first web page is accessed.

6. The mobile terminal according to claim 2, wherein the history information includes search information including information on a search operation of searching each of the web pages,
wherein the controller determines and displays the related page using the search information.

7. The mobile terminal according to claim 6, wherein the first web page is a page accessed based on a search result created using a search operation through the Internet app,
wherein the related page includes a web page included in a search result created using a search operation of searching the first web page.

8. The mobile terminal according to claim 2, wherein the history information includes link access information including an access relationship through a link between the accessed web pages,
wherein the controller determines and displays the related page using the link access information.

9. The mobile terminal according to claim 8, wherein the first web page is a page accessed through a first link,
wherein the related page includes a second web page including the first link.

10. The mobile terminal according to claim 9, wherein the second web page further includes a second link,
wherein the related page further includes a third web page accessed through the second link.

11. The mobile terminal according to claim 8, wherein the first web page includes a third link,
wherein the related page includes a fourth page accessed through the third link.

12. The mobile terminal according to claim 1, wherein the controller determines relation degrees between the respective related pages and the first web page, and controls the touch screen to display one or more of the related pages according to a priority order of the determined relation degrees.

13. The mobile terminal according to claim 12, wherein the controller acquires HTML information from each of the related pages, and displays one or more of the related pages on the basis of the acquired HTML information of each of the related page.

14. The mobile terminal according to claim 13, wherein the HTML information includes HTML header information,
wherein the HTML header information includes user search keyword information,
wherein the controller displays one or more of the related pages on the basis of a plurality of user search keyword information acquired from the respective related pages.

15. The mobile terminal according to claim 14, wherein the controller determines relation degrees between the respective related pages and the first web page by acquiring first user search keyword information included in the HTML header information from the first web page, and comparing the plurality of user search keyword information acquired from the respective related pages with the first user search keyword information.
